(19) Europäisches Patentamt
European Patent Office
Office européen des brevets

(11) **EP 4 393 284 A1**

(12) **EUROPEAN PATENT APPLICATION**
published in accordance with Art. 153(4) EPC

(43) Date of publication:
**03.07.2024 Bulletin 2024/27**

(21) Application number: **22861359.2**

(22) Date of filing: **23.08.2022**

(51) International Patent Classification (IPC):
**A01B 69/00** (2006.01)

(52) Cooperative Patent Classification (CPC):
**A01B 69/00**

(86) International application number:
**PCT/JP2022/031718**

(87) International publication number:
**WO 2023/027071 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.08.2021 JP 2021138768**

(71) Applicant: **KUBOTA CORPORATION**
**Osaka-shi, Osaka 556-8601 (JP)**

(72) Inventors:
• **SHIMADA Kotaro**
  **Sakai-shi, Osaka 590-0823 (JP)**
• **SAKAGUCHI Kazuo**
  **Sakai-shi, Osaka 590-0823 (JP)**
• **TAKAHASHI Yusuke**
  **Sakai-shi, Osaka 590-0823 (JP)**
• **MORISHITA Takafumi**
  **Sakai-shi, Osaka 590-0823 (JP)**

(74) Representative: **Müller-Boré & Partner**
**Patentanwälte PartG mbB**
**Friedenheimer Brücke 21**
**80639 München (DE)**

(54) **WORK MACHINE**

(57)    It is possible to travel along an appropriate path irrespective of the status of an agricultural field (G).

A working machine (1) includes a vehicle body (2), a first working device (60A) attachable to the vehicle body (2), a traveling device (4), a first acquirer (57h) to acquire non-travelable lines (R1) arranged at first interval(s) (x) in the agricultural field (G), and a route creator (57d) to create, based on the non-travelable lines (R1), a first route (L1) including first portions (La1). The traveling device (4) includes portions spaced apart from each other by a distance corresponding to the first interval (x), and the route creator (57d) includes a line definer (157a) to define, as travelable lines (R2), regions of the agricultural field (G) other than the non-travelable lines (R1) based on the non-travelable lines (R1) acquired by the first acquirer (57h), and a setter (157b) to set, as the first portions (La1), a path which extends from the one of the opposite edges to the other of the agricultural field (G) and along which the traveling device (4) travels on the travelable lines (R2), based on the travelable lines (R2) defined by the line definer (157a).

Fig.1

**Description**

Technical Field

The present invention relates to a working machine such as a tractor.

Background Art

Patent Literature 1 is known as a technique of creating a target travelling path for an agricultural machine.

A working vehicle assistance system of Patent Literature 1 includes a vehicle position detector that detects a position of a working vehicle, an unfinished region external shape map calculator that calculates an external shape map of an unfinished region within a planned work region from vehicle position data that is acquired by the vehicle position detector when the working vehicle travels along an outer periphery of the planned work region while doing work, and a path calculator that calculates a target travelling path along which the working vehicle travels while doing work in the unfinished region based on the external shape map calculated by the unfinished region external shape map calculator.

Citation List

Patent Literature

PTL 1: Japanese Unexamined Patent Application Publication No. 2017-55673

Summary of Invention

Technical Problem

In Patent Literature 1, the external shape map of the unfinished region is calculated, and the target travelling path is created in the calculated external shape map. However, according to the technique disclosed in Patent Literature 1, in a case where there is a place (non-travelable line) where the working machine cannot travel due to the presence of a ridge, crops, and/or the like on an agricultural field, a desirable target traveling path cannot be created. For example, a traveling device of a traveling vehicle enters the non-travelable line.

The present invention was made to solve such an issue of the related art, and an object of the present invention is to provide a working machine that can travel along an appropriate path (travel route) irrespective of the state of an agricultural field.

Solution to Problem

A working machine according to an aspect of the present invention includes a vehicle body, a first working device attachable to the vehicle body, a traveling device on the vehicle body, a first acquirer to acquire a plurality of non-travelable lines that extend from one of opposite edges of an agricultural field to the other and are arranged at a first interval or intervals, and a route creator to create, based on the plurality of non-travelable lines acquired by the first acquirer, a first route including a plurality of first portions to be traveled by the vehicle body and extending from the one of the opposite edges to the other of the agricultural field, wherein the traveling device includes portions that are spaced apart from each other by a distance corresponding to the first interval, and the route creator includes a line definer to define, as a plurality of travelable lines, regions of the agricultural field other than the plurality of non-travelable lines based on the plurality of non-travelable lines acquired by the first acquirer, and a setter to set, as the plurality of first portions, a path which extends from the one of the opposite edges to the other of the agricultural field and along which the traveling device travels on the plurality of travelable lines, based on the plurality of travelable lines defined by the line definer.

The portions of the traveling device may include a first traveling unit provided on the vehicle body and a second traveling unit provided on the vehicle body at a distance from the first traveling unit such that, in a case that the first traveling unit is located on one of the plurality of travelable lines, the second traveling unit is located on another of the plurality of travelable lines. The setter may extract two travelable lines from the plurality of travelable lines and set corresponding first portions based on the extracted two travelable lines.

The working machine may further include a second acquirer to acquire a second interval which is a working width of the first working device. The setter may set the plurality of first portions such that an interval between two adjacent straight portions is substantially equal to the second interval based on the second interval acquired by the second acquirer.

The first acquirer may acquire, as the plurality of non-travelable lines, a plurality of work lines which are arranged at the first interval or intervals and in which work has been done from the one of the opposite edges to the other of the agricultural field or from the other of the opposite edges to the one of the opposite edges of the agricultural field.

The plurality of work lines acquired as the plurality of non-travelable lines by the first acquirer may be ridge lines where ridge making has been done or crop lines where crop seeds have been sown or crops have been planted.

The working machine may further include a route acquirer to acquire a second route along which work has been done by the vehicle body in the agricultural field, a second working device attachable to the vehicle body to do second work before first work done by the first working device, and a linkage to connect the first working device or the second working device to the vehicle body. The second working device may be operable to do work at the first interval or intervals. The route acquirer may acquire, as the second route, a plurality of second portions traveled by the vehicle body having the second working device connected thereto and extending from the one of the opposite edges to the other of the agricultural field. The plurality of non-travelable lines may be a plurality of work lines which are arranged at the first interval or intervals and which result from the vehicle body traveling along the plurality of second portions and the second working device doing the second work from the one of the opposite edges to the other of the agricultural field or from the other of the opposite edges to the one of the opposite edges of the agricultural field. The setter may set the plurality of first portions by shifting the second route acquired by the route acquirer based on the plurality of travelable lines defined by the line definer.

The working machine may further include a position detector to detect a position of the vehicle body, and a display to display the position of the vehicle body detected by the position detector and the first route created by the route creator.

The working machine may further include a position detector to detect a position of the vehicle body, and an auto-steering controller to control steering of the traveling device based on the position of the vehicle body detected by the position detector and the first route created by the route creator.

The working machine may further include a position detector to detect a position of the vehicle body, and an automatic travel controller to control steering and a vehicle speed of the traveling device based on the position of the vehicle body detected by the position detector and the first route created by the route creator.

Advantageous Effects of Invention

According to the working machine, it is possible to travel along an appropriate path irrespective of a state of an agricultural field.

Brief Description of Drawings

[FIG. 1] FIG. 1 is a block diagram of a working machine.
[FIG. 2] FIG. 2 illustrates a raising/lowering device.
[FIG. 3] FIG. 3 illustrates an example of a field registration screen.
[FIG. 4A] FIG. 4A is a view for finding a contour of an agricultural field from position measurement points.
[FIG. 4B] FIG. 4B is a view for finding a contour of an agricultural field from turning points.
[FIG. 4C] FIG. 4C is a view for finding a contour of an agricultural field from corners of the agricultural field.
[FIG. 5] FIG. 5 is a view illustrating creation of a travel route and unit work sections.
[FIG. 6] FIG. 6 is a view for explaining the unit work sections.
[FIG. 7] FIG. 7 illustrates a unit work section different from the unit work sections of FIG. 6.
[FIG. 8A] FIG. 8A illustrates a relationship among a type I device, a work line, and a unit work section.
[FIG. 8B] FIG. 8B illustrates a relationship among a type II device, a work line, and a unit work section.
[FIG. 8C] FIG. 8C illustrates a relationship among a type III device, a work line, and a unit work section.
[FIG. 9A] FIG. 9A illustrates a ridge maker as an example of the type I device.
[FIG. 9B] FIG. 9B illustrates a seed spreader as an example of the type I device.
[FIG. 9C] FIG. 9C illustrates an agricultural chemical spreader as an example of the type II device.
[FIG. 9D] FIG. 9D illustrates a cultivator as an example of the type III device.
[FIG. 10] FIG. 10 is a plan view illustrating a positional relationship between non-travelable lines and travelable lines and the working machine.
[FIG. 11A] FIG. 11A is a first view for explaining a case where first work and second work are done while traveling along a second route in related art.
[FIG. 11B] FIG. 11B is a second view for explaining a case where first work and second work are done while traveling along a second route in related art.

[FIG. 11C] FIG. 11C is a third view for explaining a case where first work and second work are done while traveling along a second route in related art.

[FIG. 11D] FIG. 11D is a fourth view for explaining a case where first work and second work are done while traveling along a second route in related art.

[FIG. 12] FIG. 12 illustrates an example of a selection screen.

[FIG. 13A] FIG. 13A is a first view for explaining the second route and the travelable lines.

[FIG. 13B] FIG. 13B is a second view for explaining the second route and the travelable lines.

[FIG. 14] FIG. 14 is a view for explaining setting of first portions by a setter.

[FIG. 15A] FIG. 15A illustrates a flow of creating a first route by a route creator.

[FIG. 15B] FIG. 15B illustrates a flow of creating a first route by a route creator.

[FIG. 16] FIG. 16 illustrates an example of a second work input screen.

[FIG. 17] FIG. 17 illustrates an example of a first work input screen.

[FIG. 18] FIG. 18 illustrates an example of a route display screen.

[FIG. 19] FIG. 19 is a block diagram of a working machine according to a first variation.

[FIG. 20] FIG. 20 is a view for explaining auto-steering in the first variation.

[FIG. 21] FIG. 21 is a block diagram of a working machine according to a second variation.

[FIG. 22] FIG. 22 is a side view of the working machine.

[FIG. 23] FIG. 23 is a front view of the working machine.

Description of Embodiments

Embodiments of the present invention are described below with reference to the drawings.

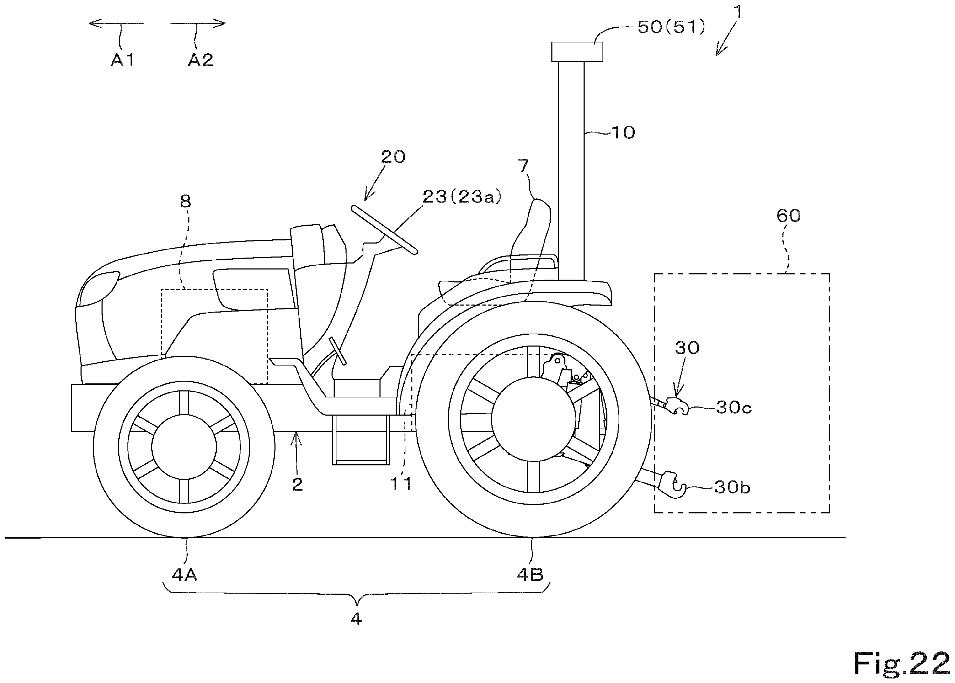

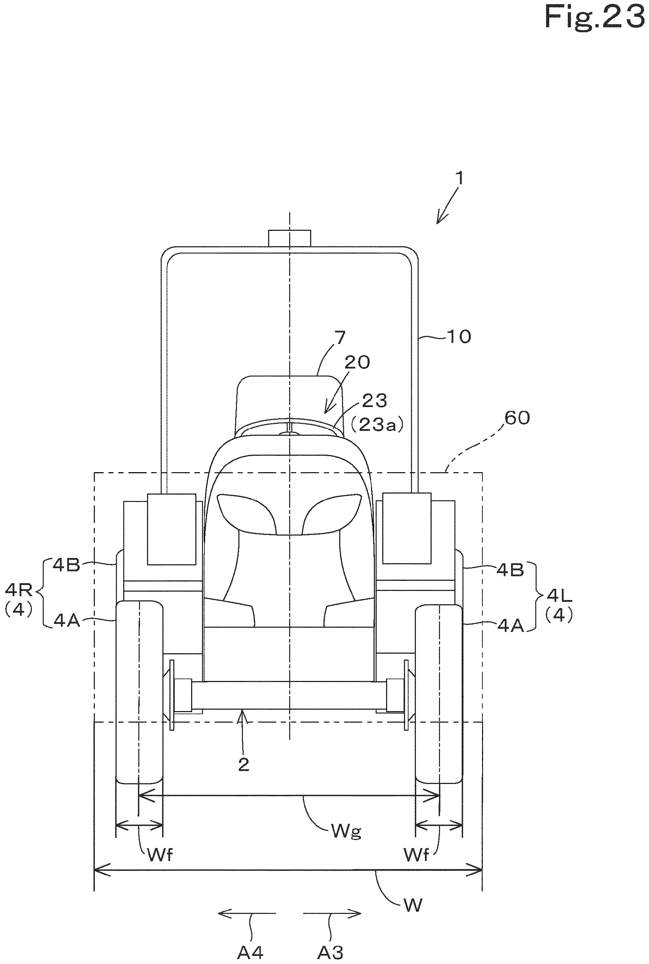

FIG. 22 is a side view illustrating an embodiment of a working machine 1, and FIG. 23 is a front view illustrating the embodiment of the working machine 1. In the present embodiment, the working machine 1 is a tractor equipped with a working device 60. Note that the working machine 1 is not limited to a tractor and may be a rice planter, a combine, or the like. For convenience of description, the following discusses an example in which the working machine 1 is a tractor equipped with the working device 60. In the following description, it is assumed that a direction (a direction indicated by arrow A1 in FIG. 22) forward of an operator (driver) sitting on an operator's seat 7 of the working machine 1 is a forward direction, a direction (a direction indicated by arrow A2 in FIG. 22) rearward of the operator is a rearward direction, a direction leftward of the operator is a leftward direction (a direction indicated by arrow A3 in FIG. 23), and a direction rightward of the operator is a rightward direction (a direction indicated by arrow A4 in FIG. 23). It is also assumed that a horizontal direction orthogonal to a front-rear direction of the working machine 1 is a width direction.

The working machine 1 includes a vehicle body 2, a prime mover 8, a first hydraulic pump 9, a transmission 11, and a linkage 30. As illustrated in FIG. 22, the vehicle body 2 includes a traveling device 4 and can travel. The traveling device 4 includes at least one front wheel 4A and at least one rear wheel 4B. The front wheel 4A and the rear wheel 4B are arranged apart from each other in the front-rear direction. In the present embodiment, one pair of front wheels 4A are provided apart from each other in the width direction of the vehicle body 2, and one pair of rear wheels 4B are provided apart from each other in the width direction of the vehicle body 2, as illustrated in FIG. 23.

That is, the traveling device 4 includes one pair of front wheels 4A and one pair of rear wheels 4B (four wheels in total) and includes a first traveling unit 4L (in the present embodiment, a left front wheel 4A and a left rear wheel 4B) provided on one side (left side) of the vehicle body 2 in the width direction and a second traveling unit 4R (in the present embodiment, a right front wheel 4A and a right rear wheel 4B) provided on the other side (right side) of the vehicle body 2 in the width direction apart by a predetermined interval from the first traveling unit 4L. The first traveling unit 4L and the second traveling unit 4R are mounted on the vehicle body 2 apart from each other in the width direction. Note that the traveling device 4 may include, for example, three wheels instead of four wheels as in the present embodiment.

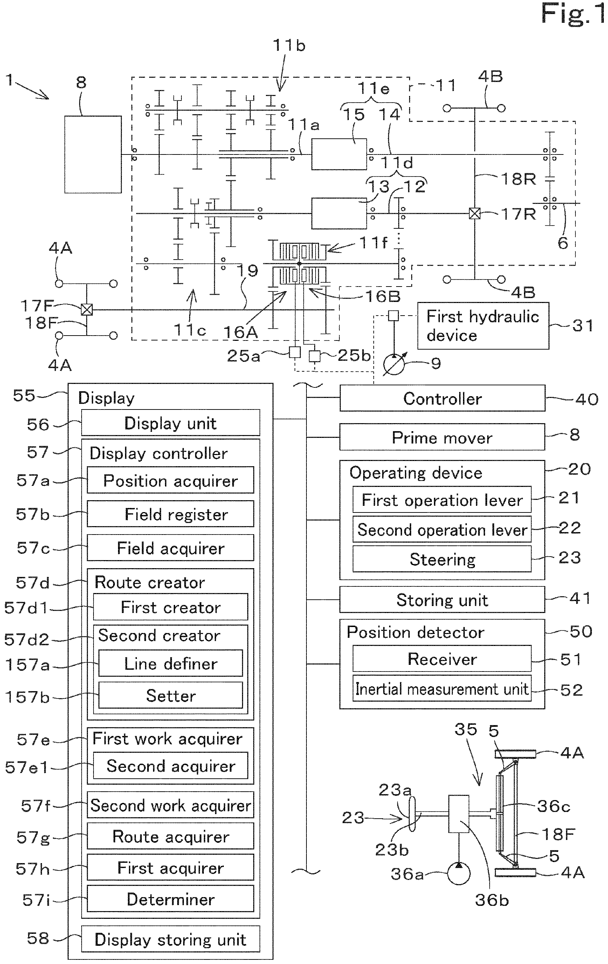

As illustrated in FIG. 1, the front wheels 4A are connected by an arm (knuckle arm) 5 that changes a direction of the front wheels 4A. The knuckle arm 5 changes the direction of the front wheels 4A, thereby allowing the vehicle body 2 to travel straight and turn. Note that it is only necessary that the vehicle body 2 can travel straight and turn. Instead of the configuration or in addition to the configuration, a rotational speed of the front wheel 4A and the rear wheel 4B on the one side (left side) and a rotational speed of the front wheel 4A and the rear wheel 4B on the other side (right side) may be changed to achieve the straight traveling and turning. The front wheels 4A and the rear wheels 4B may be tires or may be crawlers. The vehicle body 2 is provided with a PTO shaft 6 that outputs power of the prime mover 8 to an outside and the operator's seat 7 on which the operator sits.

The prime mover 8 is a diesel engine, an electric motor, or the like. In the present embodiment, the prime mover 8 is a diesel engine. The transmission 11 can switch propelling force of the traveling device 4 by changing speed stages and can switch between forward traveling and rearward traveling of the traveling device 4. The first hydraulic pump 9 is provided on the vehicle body 2 and delivers hydraulic fluid. The first hydraulic pump 9 is, for example, coupled to the prime mover 8 and delivers hydraulic fluid upon receipt of power output by the prime mover 8.

The linkage 30 is swingably provided on the vehicle body 2 and couples the working device 60. Specifically, the linkage 30 is provided on a rear portion of the vehicle body 2. The linkage 30 is swingable due to first hydraulic device 31 driven by hydraulic fluid delivered by the first hydraulic pump 9. The working device 60 is attachable and detachable to and from a rear portion of the linkage 30. The linkage 30 couples the working device 60, and thereby the working device 60 can be towed by the vehicle body 2.

The working device 60 is a device attachable to the vehicle body 2. In a case where the working machine 1 is a tractor, the working device 60 is coupled to the vehicle body 2 with the use of the linkage 30. The working device 60 may operate upon receipt of power input from an outside, for example, power input from the PTO shaft 6. Alternatively, the working device 60 may include hydraulic equipment (not illustrated) that is driven by hydraulic fluid delivered by the first hydraulic pump 9, and the hydraulic equipment may cause the working device 60 to operate. The working device 60 is a cultivator 90 for cultivation, a ridge maker 71 for ridge making, a fertilizer spreader for spreading a fertilizer, an agricultural chemical spreader 85 for spreading an agricultural chemical for pest control, a seed spreader 75 for seeding, a transplanter for transplanting a crop (seedling), a harvester for harvesting crops, a mower for mowing pasture grass or the like, a tedder for spreading pasture grass or the like, a rake for gathering pasture grass or the like, a baler for baling pasture grass or the like, or the like. That is, the linkage 30 can couple the working device 60 selected from among the various kinds described above to the vehicle body 2.

For convenience of description, the following discusses an example in which a central portion of the working device 60 in the width direction and a central portion of the working machine 1 in the width direction match in the width direction as illustrated in FIG. 23 while excluding a case where the central portion of the working device 60 in the width direction and the central portion of the working machine 1 in the width direction are deviated (offset) from each other in the width direction. However, the present invention is also applicable to the case where the central portion of the working device 60 in the width direction and the central portion of the working machine 1 in the width direction are deviated (offset) from each other in the width direction. In this case, for example, a position of the working machine 1 (a vehicle body position VP) is changed as appropriate in processing performed by a controller 40 and the like, which will be described later.

The transmission 11 is described in detail below. As illustrated in FIG. 1, the transmission 11 includes a main shaft (propeller shaft) 11a, a main transmission unit 11b, a sub-transmission unit 11c, a shuttle 11d, a PTO power transmission unit 11e, and a front transmission unit 11f. The propeller shaft 11a is rotatably supported by a housing case (transmission case) of the transmission 11. To the propeller shaft 11a, power from a crankshaft of the prime mover 8 is transmitted. The main transmission unit 11b includes a plurality of gears and a shifter that changes connection of the gears. The main transmission unit 11b changes rotation input from the propeller shaft 11a and outputs the changed rotation (change speed stages) by changing connection (engagement) of the plurality of gears as appropriate by the shifter.

Similarly, the sub-transmission unit 11c includes a plurality of gears and a shifter that changes connection of the gears. The sub-transmission unit 11c changes rotation input from the main transmission unit 11b and outputs the changed rotation (change speed stages) by changing connection (engagement) of the plurality of gears as appropriate by the shifter.

The shuttle 11d includes a shuttle shaft 12 and a forward rearward traveling switcher 13. To the shuttle shaft 12, power output from the sub-transmission unit 11c is transmitted via the gears and the like. The forward rearward traveling switcher 13 is, for example, a hydraulic clutch or the like, and switches a rotation direction of the shuttle shaft 12, that is, switch between forward traveling and rearward traveling of the working machine 1 by switching the hydraulic clutch on and off. The shuttle shaft 12 is connected to a rear wheel differential 17R. The rear wheel differential 17R rotatably supports a rear axle 18R to which the rear wheels 4B are attached.

The PTO power transmission unit 11e includes a PTO propeller shaft 14 and a PTO clutch 15. The PTO propeller shaft 14 is rotatably supported, and power from the propeller shaft 11a can be transmitted to the PTO propeller shaft 14. The PTO propeller shaft 14 is connected to the PTO shaft 6 via the gears and the like. The PTO clutch 15 is, for example, a hydraulic clutch or the like, and the hydraulic clutch is switched on and off to switch between a state where power of the propeller shaft 11a is transmitted to the PTO propeller shaft 14 and a state where power of the propeller shaft 11a is not transmitted to the PTO propeller shaft 14.

The front transmission unit 11f includes a first clutch 16A and a second clutch 16B. To the first clutch 16A and the second clutch 16B, power from the propeller shaft 11a can be transmitted, for example, power of the shuttle shaft 12 is transmitted via a gear and a transmission shaft. Power from the first clutch 16A and the second clutch 16B can be transmitted to a front axle 18F via a front transmission shaft 19. Specifically, the front transmission shaft 19 is connected to a front wheel differential 17F, and the front wheel differential 17F rotatably supports the front axle 18F to which the front wheels 4A are attached.

The first clutch 16A and the second clutch 16B are hydraulic clutches or the like. A fluid passage is connected to the first clutch 16A, and the fluid passage is connected to a first actuation valve 25a to which a hydraulic fluid delivered from the first hydraulic pump 9 is supplied. The first clutch 16A is switched between a connected state and a cutoff state depending on an opening of the first actuation valve 25a. A fluid passage is connected to the second clutch 16B, and the fluid passage is connected to a second actuation valve 25b. The second clutch 16B is switched between a connected state and a cutoff state depending on an opening of the second actuation valve 25b. The first actuation valve 25a and the second actuation valve 25b are, for example, two-position switching valves equipped with a solenoid valve and are switched to a connected state or a cutoff state by energizing or deenergizing a solenoid of the solenoid valve.

In a case where the first clutch 16A is in a cutoff state and the second clutch 16B is in a connected state, power of the shuttle shaft 12 is transmitted to the front wheels 4A via the second clutch 16B. This creates a state (4WD uniform-speed state) in which the front wheels 4A and the rear wheels 4B are driven by power (four-wheel drive (4WD) and a rotational speed of the front wheels 4A and a rotational speed of the rear wheels 4B are substantially identical. On the other hand, in a case where the first clutch 16A is in a connected state and the second clutch 16B is in a cutoff state, a state (4WD increased-speed state) is created in which four-wheel drive is performed and the rotational speed of the front wheels 4A is higher than the rotational speed of the rear wheels 4B. In a case where the first clutch 16A and the second clutch 16B are in a connected state, power of the shuttle shaft 12 is not transmitted to the front wheels 4A. This creates a two-wheel-drive (2WD) state in which the rear wheels 4B are driven by power.

As illustrated in FIG. 1, the working machine 1 includes an operating device 20 for operating the working machine 1. The operating device 20 is provided around the operator's seat 7 and can be used to operate members such as the prime mover 8, the transmission 11, and the traveling device 4. The operating device 20 includes, for example, a first operation lever 21, a second operation lever 22, and a steering 23, and the operator can hold and swing the first operation lever 21 and the second operation lever 22. The first operation lever 21 is a device that can control raising/lowering of the linkage 30, and the second operation lever 22 is a device that can operate the working device 60 coupled to the linkage 30.

The steering 23 is a device that allows the operator to manually steer the vehicle body 2 so that the vehicle body 2 travels straight or turns. As illustrated in FIG. 22, the steering 23 is provided in front of the operator's seat 7. The steering 23 includes a steering wheel 23a and a steering shaft (rotary shaft) 23b that rotatably supports the steering wheel 23a. The steering 23 includes an assist mechanism (power steering) 35. The assist mechanism 35 assists rotation of the steering shaft 23b (steering wheel 23a) by a hydraulic pressure or the like. The assist mechanism 35 includes a second hydraulic pump 36a, an auxiliary control valve 36b to which hydraulic fluid delivered from the second hydraulic pump 36a is supplied, and a steering cylinder 36c actuated by the auxiliary control valve 36b. The auxiliary control valve 36b is, for example, a three-position switching valve that can be switched by movement of a spool or the like and is switched corresponding to a steering direction (rotation direction) of the steering shaft 23b. The steering cylinder 36c is connected to an arm 5 that changes a direction of the front wheels 4A.

Therefore, when the operator holds and operates the steering wheel 23a, a switching position and an opening of the auxiliary control valve 36b is switched depending on a rotation direction of the steering wheel 23a, the steering cylinder 36c extends or contracts leftward or rightward depending on the switching position and opening of the auxiliary control valve 36b, and thereby a steering direction of the front wheels 4A can be changed. That is, the vehicle body 2 can change a traveling direction to the left or right by manual steering of the steering wheel 23 a.

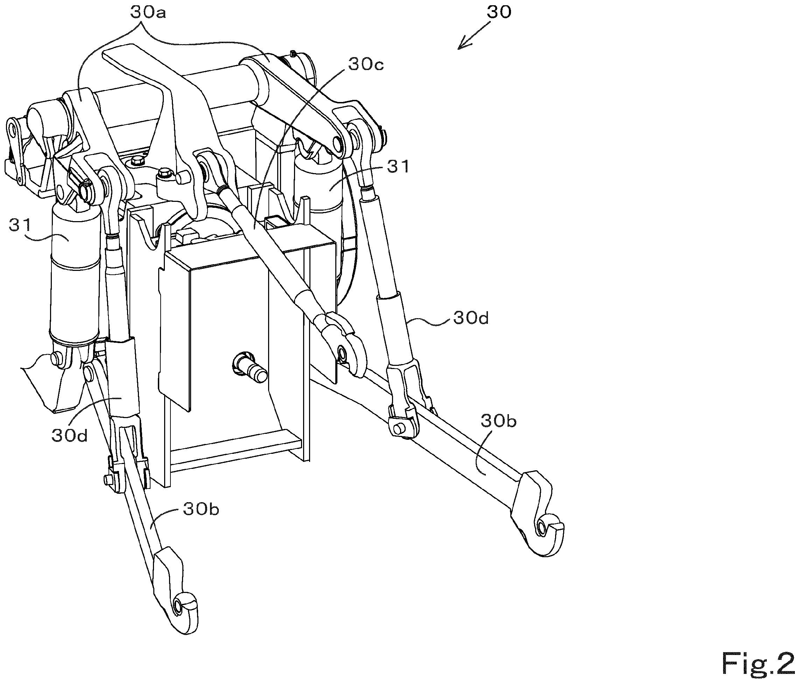

As illustrated in FIG. 2, the linkage 30 includes a lift arm 30a, a lower link 30b, a top link 30c, and a lift rod 30d. A front end portion of the lift arm 30a is supported by a rear upper portion of a case (transmission case) in which the transmission 11 is housed so as to be swingable up or down.

A front end portion of the lower link 30b is supported by a rear lower portion of the transmission 11 so as to be swingable up or down. A front end portion of the top link 30c is supported by a rear portion of the transmission 11 above the lower link 30b so as to be swingable up or down. The lift rod 30d couples the lift arm 30a and the lower link 30b. The working device 60 is coupled to a rear portion of the lower link 30b and a rear portion of the top link 30c.

As illustrated in FIG. 1, the working machine 1 includes a controller 40 and a storing unit (memory and/or storage) 41. The controller 40 is a device realized by an electric/electronic circuit, a program stored in a CPU or the like, and the like. The controller 40 controls various devices of the working machine 1. Specifically, the controller 40 can perform control such as control of the first hydraulic device 31, the working device 60, and change of output of the first hydraulic pump 9. The storing unit 41 is a non-volatile memory or the like and stores therein, for example, various kinds of information concerning control of the controller 40.

As illustrated in FIG. 1, the working machine 1 includes a position detector (positioning device) 50. The position detector 50 can detect a position thereof (measured position information including latitude and longitude) by a satellite positioning system (positioning satellite) such as D-GPS, GPS, GLONASS, BeiDou, Galileo, or Michibiki. That is, the position detector 50 receives a satellite signal (a position of the positioning satellite, a transmission time, correction information, and the like) transmitted from the positioning satellite and detects a position (e.g., latitude and longitude) of the working machine 1, that is, a vehicle body position VP based on the satellite signal. The position detector 50 includes a receiver 51 and an inertial measurement unit (IMU) 52. The receiver 51 is a device that includes an antenna and the like and receives a satellite signal transmitted from the positioning satellite, and is attached to the working machine 1 separately from the inertial measurement unit 52. In the present embodiment, the receiver 51 is attached to an upper portion of a ROPS 10 provided on the vehicle body 2, as illustrated in FIGS. 22 and 23. Note that an attachment position of the receiver 51 is not limited to the above position, and may be a central portion of a hood or, in a case where the vehicle body 2 is provided with a protection mechanism such as a cabin, may be an upper portion of the protection mechanism.

The inertial measurement unit 52 includes an acceleration sensor that detects an acceleration, a gyroscope sensor that detects an angular speed, and the like. The inertial measurement unit 52 is provided below the working machine 1, for example, below the operator's seat 7, and can detect a roll angle, a pitch angle, a yaw angle, and the like of the working machine 1.

As illustrated in FIG. 1, the working machine 1 includes a display 55. The display 55 is, for example, a traveling assistance device provided in the vicinity of the operator's seat 7. The display 55 includes a display unit 56, a display controller 57, and a display storing unit (memory and/or storage) 58. The display unit 56 is a liquid crystal panel, a touch panel, or another kind of panel and can display information for assisting traveling of the working machine 1 such as a field F expressing an agricultural field G. The display unit 56 can display various kinds of information concerning the working machine 1 and the working device 60 in addition to the information for assisting traveling of the working machine 1.

The display controller 57 is realized by an electric/electronic component provided in the display 55, a program stored in the display storing unit 58, which will be described later, and the like. The display controller 57 causes a screen visualizing information stored in the display storing unit 58 to be displayed on the display unit 56.

The display storing unit 58 is a non-volatile memory or the like and stores therein various kinds of information concerning the working machine 1 and the working device 60. The display 55 is communicably connected to a device provided in the working machine 1 by a cable or wirelessly and can transmit and receive information to and from the device. Specifically, for example, the display controller 57 of the display 55 and the controller 40 of the working machine 1 are communicably connected.

Note that although the display 55 is a traveling assistance device provided in the vicinity of the operator's seat 7 in the above embodiment, the display 55 may be a computer such as a personal computer (PC), a smartphone (multifunctional mobile phone), or a tablet PC as long as the display 55 includes the display unit 56, the display controller 57, and the display storing unit 58.

As illustrated in FIG. 1, the working machine 1 includes a position acquirer 57a, a field register 57b, and a field acquirer 57c. In the present embodiment, the position acquirer 57a, the field register 57b, and the field acquirer 57c are each realized by an electric/electronic component, a program incorporated into the display 55, and the like, and the display controller 57 of the display 55 also functions as the position acquirer 57a, the field register 57b, and the field acquirer 57c. Note that although the display controller 57 of the display 55 also functions as the position acquirer 57a, the field register 57b, and the field acquirer 57c in the present embodiment, the controller 40 or the like may include the position acquirer 57a, the field register 57b, and the field acquirer 57c, and the configuration thereof is not limited to the above configuration.

The position acquirer 57a acquires a plurality of position measurement points detected while the working machine 1 circles around the agricultural field G. Specifically, in the present embodiment, the position acquirer 57a acquires, as a plurality of position measurement points VP, positions (vehicle body positions VP) of the working machine 1 detected by the position detector 50. Note that it is only necessary that the position acquirer 57a acquires a plurality of position measurement points, and a method for acquiring the plurality of position measurement points is not limited to the above method. It is also possible to employ a configuration in which a storing unit such as a memory in which positional information of a plurality of position measurement points is stored in advance and the display 55 are connected and the positional information of the plurality of position measurement points is acquired from the storing unit.

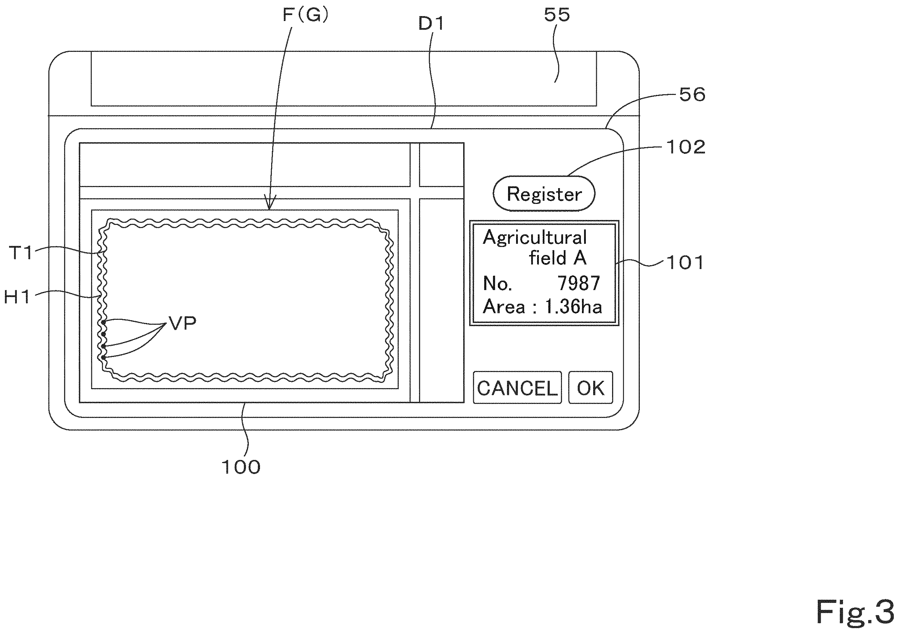

The field register 57b registers a contour H1 of a predetermined agricultural field G, for example, positions corresponding to the contour H1 of the predetermined agricultural field G as the field F displayed on the display unit 56. When the operator performs a predetermined operation on the display 55, the display controller 57 causes a field registration screen D1 to be displayed on the display unit 56, as illustrated in FIG. 3. The field registration screen D1 displays a field display portion 100 showing the field F including the agricultural field G and the vehicle body position VP of the working machine 1 and a first information display portion 101 showing agricultural field identification information such as a name (agricultural field name) of the agricultural field G and an agricultural field management number. Not only image data of the agricultural field G, but also positional information such as latitude and longitude are associated with the field F. When the operator performs a predetermined operation on the display 55, the display controller 57 causes the field registration screen D1 to be displayed on the display unit 56. When the display unit 56 displays the field registration screen D1, the operator causes the working machine 1 to circle within the agricultural field G by operating the working machine 1. The position acquirer 57a acquires the vehicle body position VP detected by the position detector 50 on a predetermined cycle, and records the vehicle body position VP in the display storing unit 58 each time and causes the vehicle body position VP to be displayed on the field display portion 100 each time (only some vehicle body positions VP are displayed in FIG. 3 for convenience of description).

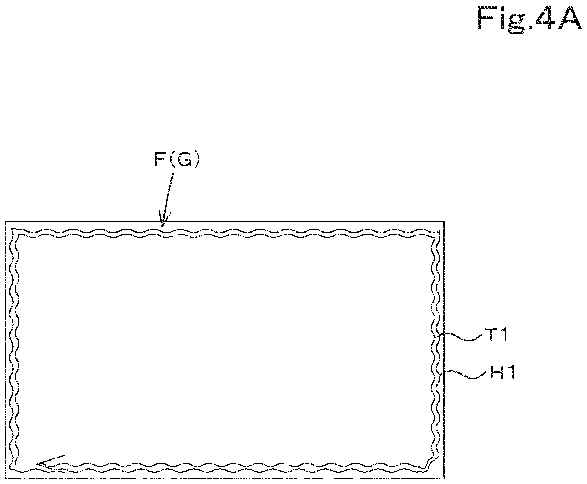

When the operator selects a registration button 102 after the working machine 1 finishes circling within the agricultural field G, the field register 57b calculates a traveling track T1 of the working machine 1 based on the recorded vehicle body positions VP. The display controller 57 causes the traveling track T1 to be displayed on the field F in the field display portion 100, as illustrated in FIG. 4A. In the example of FIG. 4A, a line T1 passing the plurality of vehicle body positions VP in an order of detection (order of acquisition) and returning to an initially detected position VP is obtained as the traveling track of the working machine 1.

The vehicle body position VP is a GPS position of the position detector 50, and the traveling track T1 is a track of movement of the GPS position. Accordingly, the field register 57b forms a line H1 between the traveling track T1 and an external shape line of the field F by shifting the traveling track T1 outward by an amount equivalent to an interval in the width direction from the GPS position of the working machine 1 to an outer end of the circling working device 60 (in FIG. 4A, a left end of the working device 60 since the working machine 1 circles in the agricultural field G in a clockwise direction). In the present embodiment, the shift amount is set identical to a half of an external width (a length in the width direction) of the working device 60 or a half of a working width W (a length in the width direction of a range where the working device 60 exerts some kind of action on the agricultural field G) of the working device 60 since the GPS position of the position detector 50 is located at a center of the working machine 1 and the center of the working machine 1 in the width direction and a center of the working device 60 in the width direction match. In another example, the line H1 may be formed between the traveling track T1 and the external shape line of the field F while setting, as the shift amount, a value that is smaller by a predetermined degree or larger by a predetermined degree than the interval in the width direction from the GPS position of the working machine 1 to the outer end of the circling working device 60.

The field register 57b regards the line H1 thus formed as a contour (external shape) of the agricultural field G and registers (stores) the field F expressed by the contour H1 in the display storing unit 58. When registering the field F in the display storing unit 58, the field register 57b associates agricultural field identification information such as a name of the agricultural field G (agricultural field name) and an agricultural field management number with the field F. A plurality of fields F and the like can be registered in the display storing unit 58, and when the field register 57b registers a field F, the display controller 57 causes this field F (the contour H1 of the agricultural field G) to be displayed.

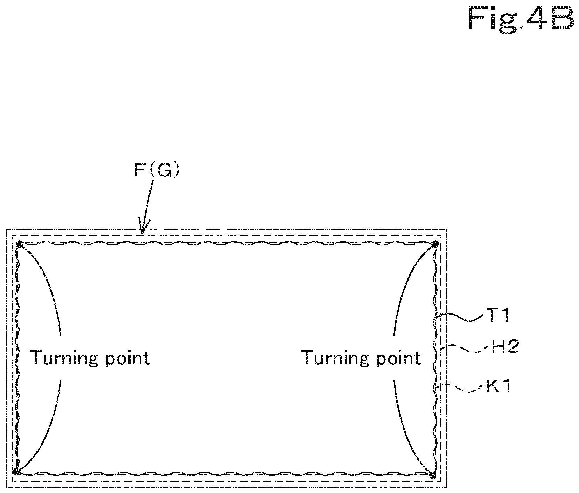

The above method for registering the agricultural field G (field F) is an example, and a method for registering the agricultural field G (field F) is not limited to this. In another example, the field register 57b calculates turning points from the traveling track T1 of the working machine 1 and form a line K1 passing the turning points, as illustrated in FIG. 4B. The field register 57b may form a line H2 between the traveling track T1 and the external shape line of the field F by shifting the line K1 outward by the shift amount, regard the line H2 as a contour K2 of the agricultural field G and the field F, and register the field F in the display storing unit 58.

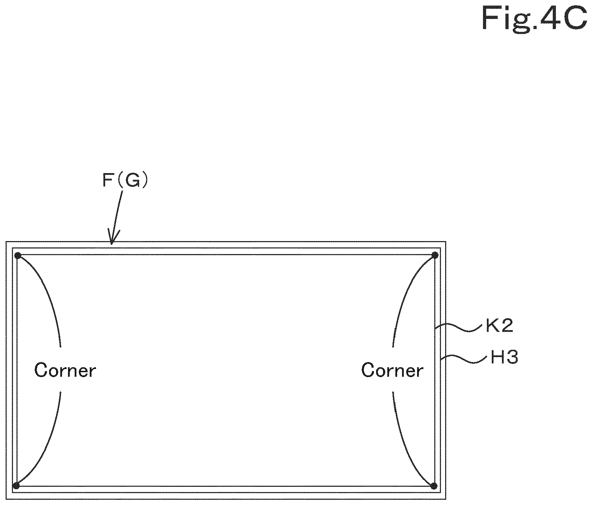

Alternatively, the operator may designate corners of the agricultural field G by operating a predetermined switch or the like while the working machine 1 circles, as illustrated in FIG. 4C. In this case, the field register 57b forms a line K2 passing the corners of the agricultural field G in an order of designation and returning to an initially designated corners. The field register 57b may form a line H3 between the traveling track T1 and the external shape line of the field F by shifting the line K2 outward by the above shift amount, regard the line H3 as a contour K4 of the agricultural field G and the field F, and register the field F in the display storing unit 58.

The contours H1, H2, and H3 of the agricultural field G and the field F may be, for example, data expressed by a position (latitude and longitude), data expressed by a coordinate (an X-axis and a Y-axis) system, or data expressed in another way.

As described above, the display 55 can register a plurality of fields F by using the field register 57b. To do work or the like, the field acquirer 57c acquires a field F expressing a predetermined agricultural field G among the plurality of fields F.

As illustrated in FIG. 1, the working machine 1 includes a route creator 57d that creates a travel route L along which the vehicle body 2 travels. In the present embodiment, the route creator 57d is realized by an electric/electronic component, a program incorporated into the display 55, and the like, and the display controller 57 of the display 55 also functions as the route creator 57d. Note that although the display controller 57 of the display 55 also functions as the route creator 57d in the present embodiment, the controller 40 or the like may include the route creator 57d, and the configuration thereof is not limited to the above configuration.

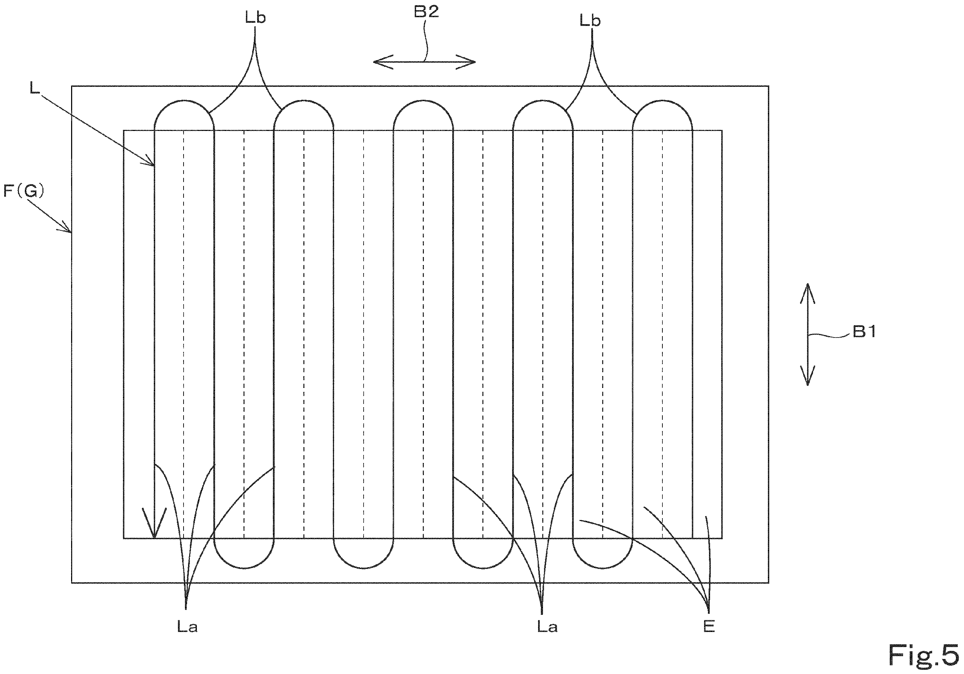

The route creator 57d includes a first creator 57d1, and the first creator 57d1 can create the travel route L of the working machine 1 on the field F such as the one illustrated in FIG. 5, for example, by referring to the field F registered in the display storing unit 58. The travel route L is a route along which the working machine 1 travels, and the working machine 1 travels so that the vehicle body position VP moves along the travel route L. The first creator 57d1 creates the travel route L on the field F based on the working width W and the like.

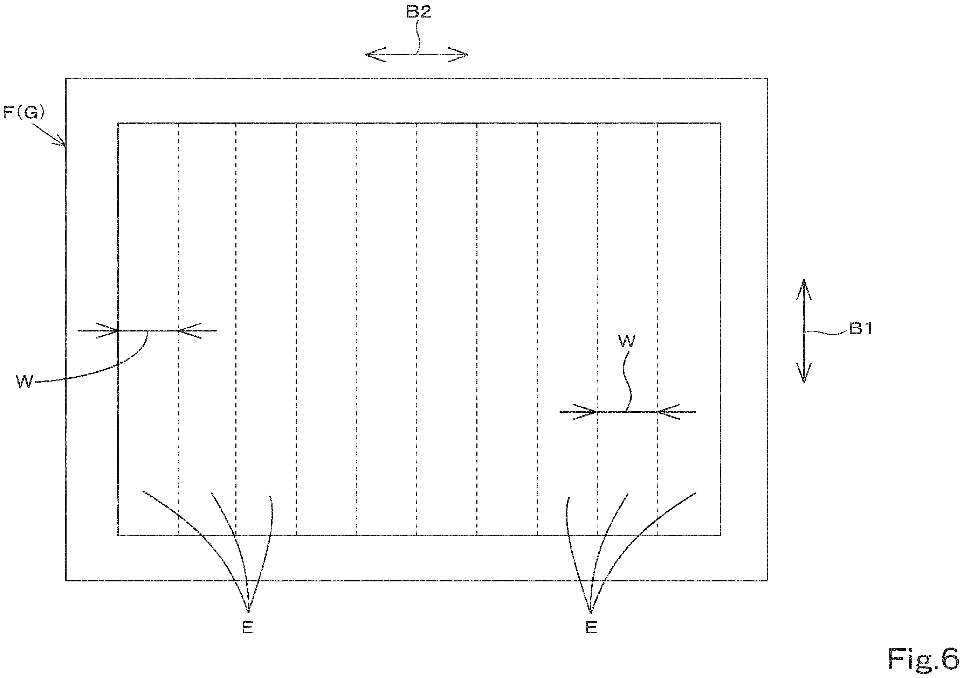

Specifically, for example, the first creator 57d1 creates, on the field F, a plurality of unit work sections E where work is done by the working device 60 by dividing the agricultural field G on the field F into sections of the working width W vertically or horizontally, as illustrated in FIG. 6. The first creator 57d1 creates, on the field F, a plurality of unit work sections E where work is done by the working device 60 by dividing the agricultural field G on the field F into sections of the working width W vertically or horizontally. That is, the first creator 57d1 creates a plurality of unit work sections E having a width identical to the working width W on the field F. Each of the unit work sections E extends from one of opposite edges to the other of the agricultural field G (in a first direction B1). Note that in the following description, a direction orthogonal to the first direction B 1 is sometimes referred to as a second direction B2.

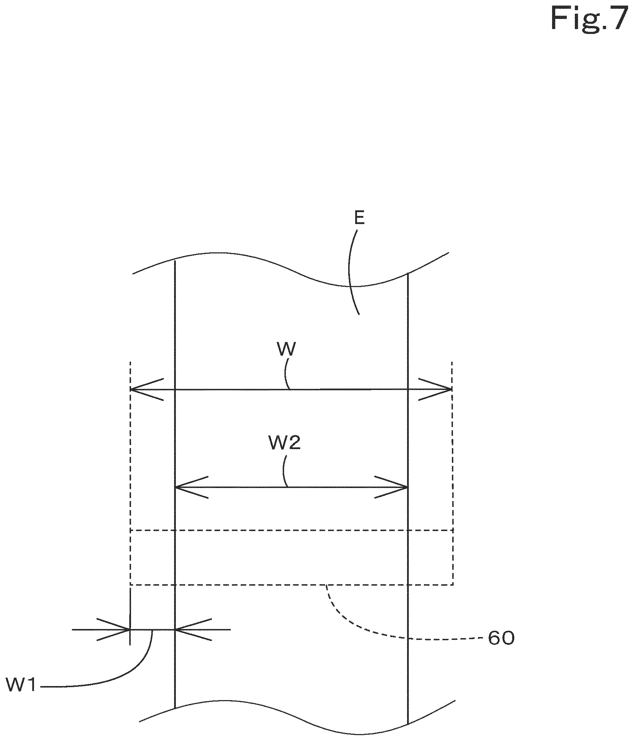

The first creator 57d1 may create, on the field F, a plurality of unit work sections E having a width (actual working width) W2 obtained by excluding overlap(s) W1 from the working width W, as illustrated in FIG. 7. The overlap W1 can be input to a screen displayed on the display unit 56 by operating the display 55. That is, the first creator 57d1 sets, as the unit work sections E, regions where work is done on the agricultural field G by the working device 60 in a case where the working machine 1 to which the working device 60 is coupled travels.

As illustrated in FIG. 5, the first creator 57d1 creates, for each unit work section E of the field F, a section line La along which the working machine 1 travels straight. That is, for example, the first creator 57d1 creates, in a central portion of the unit work section E in the width direction, a substantially straight section line La connecting end portions of the unit work section E in a longitudinal direction. That is, the section line La extends in the first direction B1. The first creator 57d1 creates a turning portion Lb where the working machine 1 turns. That is, the first creator 57d1 creates the turning portion Lb by connecting end portions of adjacent section lines La in an arc manner.

Note that although each unit work section E has a substantially rectangular shape extending in the first direction B 1 in the above embodiment, each unit work section E may have a relatively gradually curved shape or a zigzag shape as long as each unit work section E has a width identical to the working width W and extends in the first direction B1. That is, although the section line La is a straight line extending in the first direction B1, the section line La may also have a relatively gradually curved shape or a zigzag shape as long as the section line La connects end portions of the unit work section E in the longitudinal direction in a central portion of the unit work section E in the width direction.

As described above, there are various kinds of working devices 60 for various kinds of work. Examples of the working device 60 include the working device 60, such as the ridge maker 71, the fertilizer spreader, the seed spreader 75, and the transplanter, which does work in accordance with positions of ridges and crops in the agricultural field G so that the positions of the ridges and the positions of the crops correspond, and the working device 60, such as the cultivator 90 and the agricultural chemical spreader 85, which does work in a relatively wide range irrespective of the positions of the ridges and crops. Even models that do the same work may be different in working width W.

In the following description, the working device 60 which does work directly interfering with soil in the agricultural field G including forming ridges and performing seeding/planting in each ridge, such as the ridge maker 71 and the seed spreader 75, is referred to as a "type I device 61". The working device 60which does work not directly interfering with soil in the agricultural field G where ridges have been formed and planting has been completed, such as the agricultural chemical spreader 85 and a fertilizer applicator, is referred to as a "type II device 62". The working device which does work directly interfering soil irrespective of the positions of ridges and crops, such as the cultivator 90, is referred to as a "type III device 63".

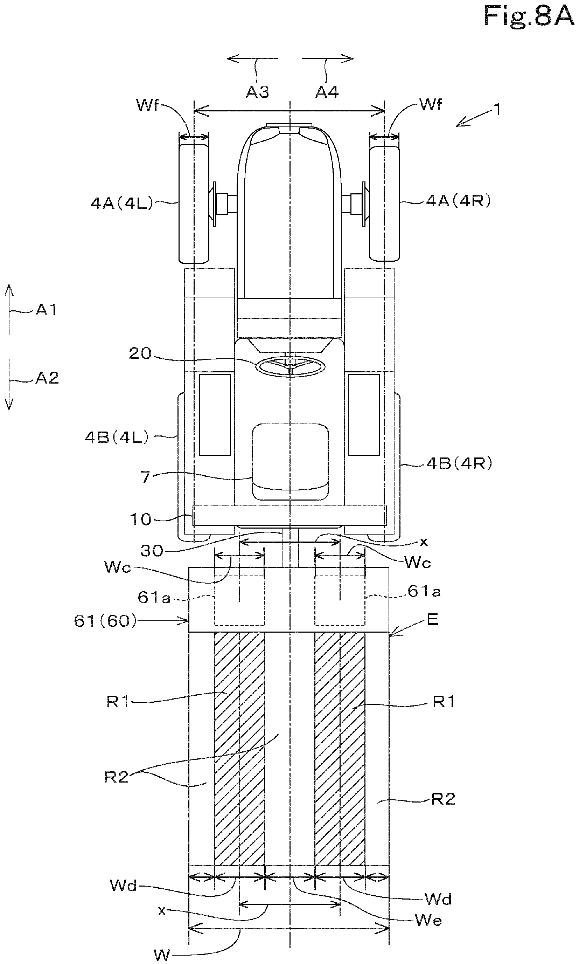

As illustrated in FIG. 8A, the type I device 61 includes one or more working units 61a. Each working unit 61a is a structure that does ground work on the agricultural field G and forms a work line R1 extending in the direction of travel (traveling direction) of the working machine 1 when the type I device 61 is towed by the working machine 1. In the following description, the width over which the working unit 61a does work is referred to as a unit working width Wc. More specifically, the unit working width Wc may be the width of a product of work actually done by the working unit 61a or may be the width of a target product included in the product of work actually done by the working unit 61a. For example, in a case that the ridge maker 71 forms a ridge, the unit working width Wc may be the width of the ridge or may be the width of an upper surface (the portion that excludes the skirts of the ridge) of the ridge.

In a case that the type I device 61 includes a plurality of working units 61a, the plurality of working units 61a are arranged at equal intervals (at first interval(s) x) in the width direction. The first interval x is fixed in advance for some type I devices 61. The first interval x may be freely selected by an operator in accordance with a series of work done in the agricultural field G. In such a case, the first interval x is selected such that an interval between the working units 61a of one working device 60 and an interval between the working units 61a of another working device 60 are the same.

The plurality of working units 61a are arranged such that the distance from the center of one working unit 61a to the center of another working unit 61a adjacent to the one working unit 61a is the first interval x. The width (unit working width Wc) over which each working unit 61a does work is smaller than the first interval x (Wc < x).

Specifically, in a case that the working machine 1 travels along the travel route L illustrated in FIG. 5, the working units 61a form work lines R1 which are long narrow regions arranged at equal interval(s) on the agricultural field G, as illustrated in FIG. 8A. In the present embodiment, since the widthwise center of the working machine 1 and the widthwise center of the working device 60 coincide with each other and the vehicle body position VP is located at the widthwise center of the working machine 1, the work lines R1 formed are symmetric with respect to the travel route L in the width direction in the unit work section E.

In a case that the type I device 61 includes a plurality of working units 61a, the work lines R1 are formed at first interval(s) x in a direction perpendicular to the longitudinal direction in the unit work section E. In other words, the type I device 61 forms regions (work lines R1) where work is done and regions (lines R2) where work is not done in the unit work section E, and each work line R1 is the smallest unit region equal to or smaller than the unit work section E formed in the agricultural field G. The width (first width) Wd of each work line R1 is the same as the unit working width Wc.

Each work line R1 is a ridge or an upper surface of a ridge which may be damaged or crops which may be damaged if contacted by the traveling device 4. In other words, the work lines R1 are non-travelable lines R1 where the traveling device 4 cannot travel. That is, the non-travelable lines R1 are lines that extend from one of opposite edges to the other of the agricultural field G (in the first direction B 1) and are formed at first interval(s) x in the second direction B2. Although the non-travelable lines R1 are substantially straight in the present embodiment, the non-travelable lines R1 may be relatively gently curved or may have a zigzag shape. For convenience of description, the following mainly discusses a case where the work lines R1 are ridges or crops.

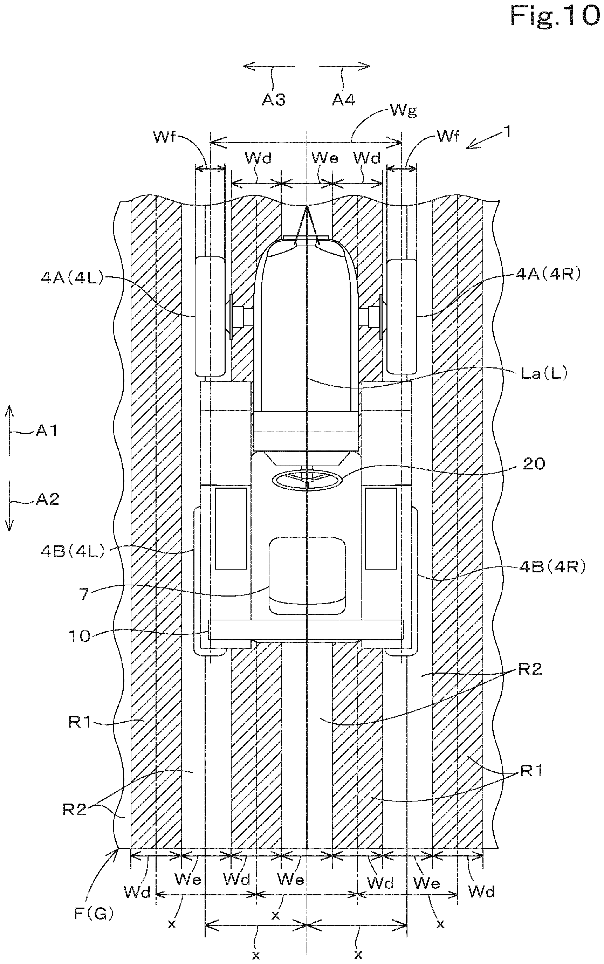

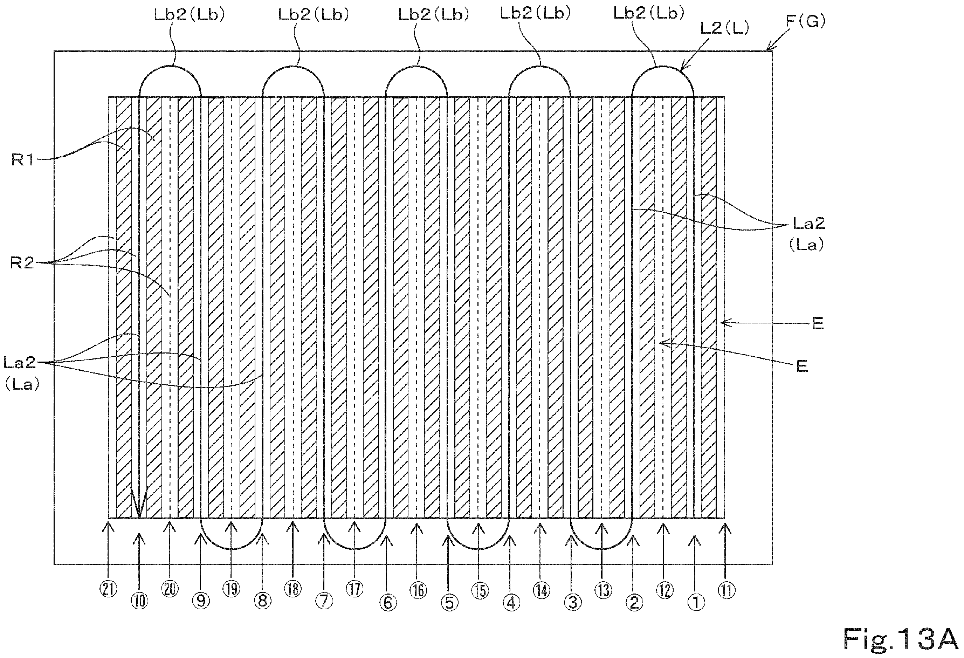

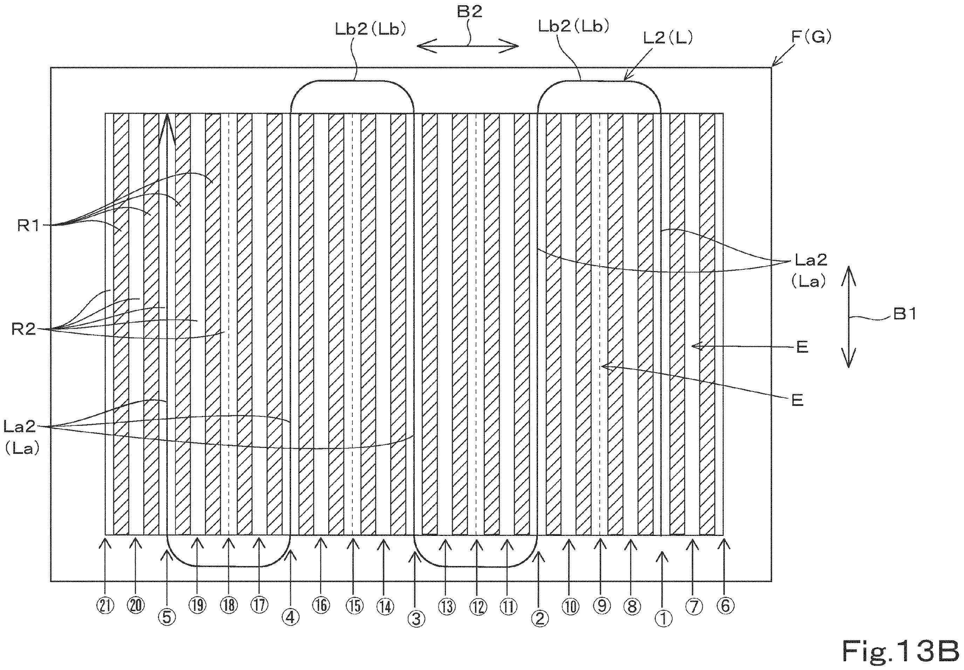

The lines R2 are adjacent to the plurality of non-travelable lines R1 and are regions other than the work lines R1 in the unit work section E. Specifically, the plurality of lines R2 are adjacent to and on opposite sides of the plurality of non-travelable lines R1 in the direction perpendicular to the non-travelable lines R1 (second direction B2). That is, as illustrated in FIGS. 13A and 13B, the plurality of lines R2 include a line between the plurality of non-travelable lines R1 and two lines located adjacent to and outward of the outermost ones of the plurality of lines R2. As illustrated in FIGS. 8A and 10, the lines R2 extend from one of opposite edges to the other of the agricultural field G (in the first direction B 1) and are arranged at first interval(s) x in the second direction B2. Note that although the lines R2 are substantially straight in the present embodiment, the lines R2 may be relatively gently curved or may have a zigzag shape.

As illustrated in FIGS. 8A and 10, the width (second width) We of each of the plurality of lines R2 is the same as the difference between the first interval x and the unit working width Wc (We = x - Wc).

The relationship between the position of the traveling device 4 (the positions of the first traveling unit 4L and the second traveling unit 4R), the first interval x, and the unit working width Wc is described below. As illustrated in FIG. 10, the dimension (third width) Wf of a ground contact surface of the traveling device 4 in the width direction and the tread (fourth width) Wg are set such that, in a case where the first traveling unit 4L is located in one line R2, the second traveling unit 4R is located in another line R2. In other words, the lines R2 are travelable lines R2 that are set such that the first traveling unit 4L and the second traveling unit 4R do not make contact with ridges, crops, or the like as long as the first traveling unit 4L and the second traveling unit 4R travel along the lines R2 when the traveling device 4 travels. Note that, in a case where the work lines (non-travelable lines) R1 are upper surfaces of ridges, the lines R2 are travelable lines R2 set such that the first traveling unit 4L and the second traveling unit 4R do not make contact with at least the upper surfaces of the ridges although the first traveling unit 4L and the second traveling unit 4R may damage skirts of the ridges, as long as the first traveling unit 4L and the second traveling unit 4R travel along the lines R2 when the traveling device 4 travels.

First, the dimension (third width) Wf of the ground contact surface of the traveling device 4 in the width direction, that is, the tire width Wf of ach of the front wheels 4A and the rear wheels 4B in the present embodiment, is less than the dimension (second width) We of the travelable line R2 in the width direction (Wf < We). As illustrated in FIGS. 8A and 10, the second width We is equal to the difference between the first interval x and the unit working width Wc (We = x - Wc), and therefore, in other words, the tire width Wf of each of the front wheels 4A and the rear wheels 4B is set less than the difference between the first interval x and the unit working width Wc (Wf < We = x - Wc).

Next, the tread (fourth width) Wg is the distance from a widthwise center of the first traveling unit 4L to the widthwise center of the second traveling unit 4R, and, in a case where the fourth width Wg is appropriate, it is possible to avoid contact of the first traveling unit 4L and the second traveling unit 4R with ridges, crops, or the like. Specifically, in a case where the working machine 1 travels along the travel route L (section lines La), assuming that k is the number of work lines R1 located between the first traveling unit 4L and the second traveling unit 4R, the fourth width Wg is larger than the sum of the product of the first interval x and the natural number k-1,the first width Wd, and the third width Wf (Wg > x (k - 1) + Wd + Wf). The fourth width Wg is smaller than the difference between the product of the first interval x and the natural number k + 1 and the third width Wf (Wg < x (k + 1) - Wf).

Accordingly, the distance (Wg - Wf) between the first traveling unit 4L and the second traveling unit 4R is not smaller than the widthwise dimension (x(k-1) + Wd) of the work line(s) R1 located between the first traveling unit 4L and the second traveling unit 4R, and the distance (Wf + Wg) between the outer edge of the first traveling unit 4L in the width direction and the outer edge of the second traveling unit 4R is not larger than the distance (x(k + 1)) between one work line R1 and another work line R1 which are located beside the working machine 1. That is, the traveling device 4 include portions spaced apart from each other by a distance corresponding to the first interval x. With this, the first traveling unit 4L and the second traveling unit 4R do not make contact with ridges, crops, or the like as long as the first traveling unit 4L and the second traveling unit 4R travel along the lines R2 when the traveling device 4 travels.

Note that the tread (fourth width) Wg is preferably substantially an integral multiple of the first interval x. The operator adjusts the first width wd, the first interval x, the third width Wf, and the fourth width Wg so that the above condition is satisfied. For example, the operator can make fine adjustments to the third width Wf and the fourth width Wg, for example, by replacing traveling devices (in the present embodiment, the front wheels 4A and the rear wheels 4B) and changing the second width We and the fourth width Wg as appropriate.

Thus, the lines R2 are lines where the first traveling unit 4L and the second traveling unit 4R do not make contact with ridges, crops, or the like as long as the first traveling unit 4L and the second traveling unit 4R travel along the lines R2 when the traveling device 4 travels, that is, the travelable lines R2 along which the traveling device 4 can travel.

As illustrated in FIG. 10, in a case where the working machine 1 travels along the travel route L (section line La), the first traveling unit 4L and the second traveling unit 4R travel along the travelable lines R2 which are located on opposite sides of the vehicle body 1 in the width direction and which are distant, by 1/2 the fourth width Wg, from the section line La in the direction perpendicular to the section line La. In other words, the section line La and the travelable lines R2 along which the first traveling unit 4L and the second traveling unit 4R travel correspond to the fourth width Wg. That is, with regard to the travel route L (section line La) and the travelable lines R2, when one travelable line R2 is selected from the plurality of travelable lines R2, the section line La on which the working machine 1 travels when the first traveling unit 4L or the second traveling unit 4R travels along the one travelable line R2 is defined based on the fourth width Wg. On the other hand, when one section line La is selected from the plurality of section lines La, the travelable lines R2 along which the first traveling unit 4L and the second traveling unit 4R travel when the working machine 1 travels along the one section line La are defined based on the fourth width Wg.

For example, in a case where the type I device 61 is the ridge maker 71, the working units 61a are ridgers 72 that form a ridge by guiding soil of the agricultural field G. The ridge maker 71 forms, as the work lines R1, ridge lines Ra obtained by ridge making, and the dimension (the width of the ridge or the width of an upper surface of the ridge) of each of the ridge lines Ra in the width direction is the same as the unit working width Wc. In a case where the type I device 61 is the seed spreader 75, the working units 61a are seeding nozzles 76 to plant seeds from a container 78 onto the agricultural field G and compacting rollers 77. The work lines R1 are crop lines Rb where seeds of crops have been planted, and the dimension of each of the crop lines Rb in the width direction is the same as the unit working width Wc. In a case where the type I device 61 is a transplanter, the working units 61a are hoppers to plant crops. The work lines R1 are crop lines Rb where crops have been planted by the hoppers, and the dimension of each of the crop lines Rb in the width direction is the same as the unit working width Wc.

Note that for convenience of description, the following mainly describes a case where the number of working units 61a of the type I device 61 is an even number. In the present embodiment, as described earlier, a case where the widthwise center of the working device 60 coincides with the widthwise center of the working machine 1 is described as an example for convenience of description, and therefore the midpoint between two innermost working units 61a among the plurality of working units 61a of the type I device 61 coincides with the widthwise center of the working machine 1.

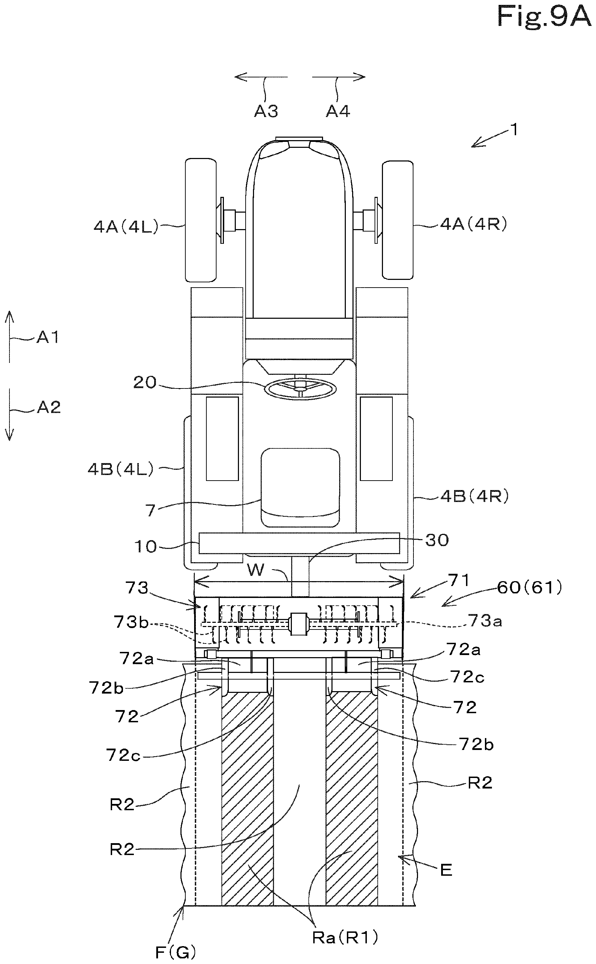

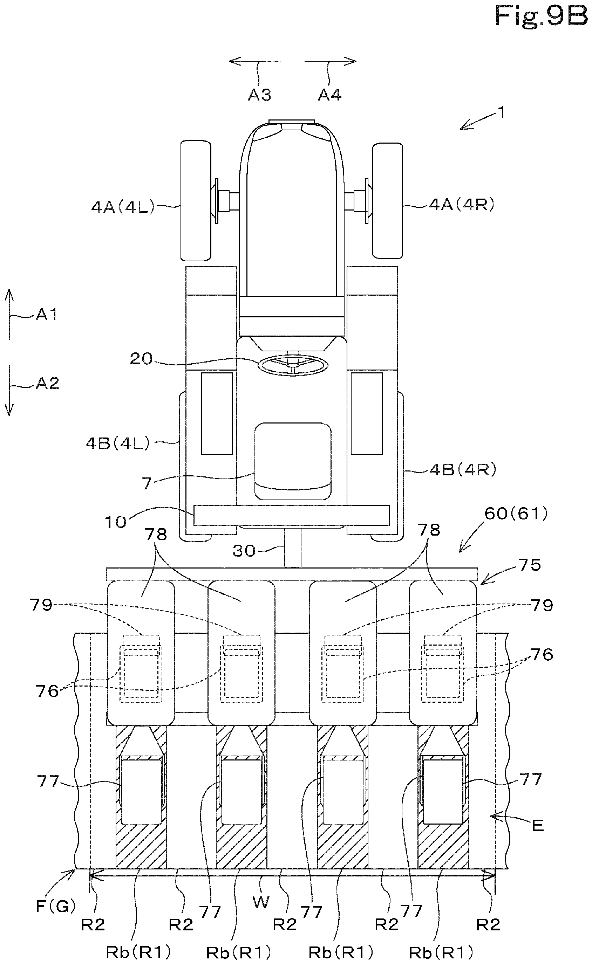

The type I device 61, the working units 61a, the work lines R1, and the like are described in detail below based on the ridge maker 71 illustrated in FIG. 9A and the seed spreader 75 illustrated in FIG. 9B as examples. The ridge maker 71 includes one or more ridgers 72 as the working units 61a. In the present embodiment, a pair of ridgers 72 are arranged in the width direction. Specifically, as illustrated in FIG. 9A, the distance from the widthwise center of one ridger 72 to the widthwise center of the other ridger 72 is the first interval x. That is, in a case where the working device 60 is the ridge maker 71, the first interval x is a "ridge-to-ridge distance" between the center of one ridge and center of another ridge adjacent to the one ridge.

As illustrated in FIG. 9A, each of the ridgers 72 includes a top plate 72a, a first side plate 72b, and a second side plate 72c. The top plate 72a defines an upper portion of the ridger 72 and is inclined downward in a front-to-rear direction. The first side plate 72b extends downward from one of opposite edges (left edge) of the top plate 72a in the width direction, the second side plate 72c extends downward from the other of the opposite edges (right edge) of the top plate 72a in the width direction, and the ridger 72 defines a substantially trapezoidal shape in rear view.

In the example illustrated in FIG. 9A, the ridge maker 71 includes a pair of ridgers 72 and therefore can make two ridge lines Ra by being towed by the working machine 1. Note that in a case where the ridge maker 71 includes three ridgers 72, the ridge maker 71 make three ridge lines Ra by being towed by the working machine 1, and in a case where the ridge maker 71 includes four ridgers 72, the ridge maker 71 make four ridge lines Ra by being towed by the working machine 1.

Note that the ridge maker 71 illustrated in FIG. 9A includes a rotary cultivator 73 located forward of the ridgers 72, and the ridgers 72 make ridges by shaping the soil thrown backward by the rotary cultivator 73. The rotary cultivator 73 includes a tine shaft 73a and tillage tines 73b. The tine shaft 73a includes a rotary axis extending in the width direction and performs tillage by being driven by power output from the PTO shaft 6.

In the ridge maker 71 illustrated in FIG. 9A, the working width W is the distance from one of opposite ends (left end) of the rotary cultivator 73 in the width direction to the other of the opposite ends (right end) of the rotary cultivator 73 in the width direction. In a case where the ridge maker 71 does not include the rotary cultivator 73, the working width W is the distance from a member provided on one of opposite sides (left side) in the width direction to guide soil to the ridger 72 to a member provided on the other of the opposite sides (right side) in the width direction to guide soil to the ridger 72.

The seed spreader 75 includes one or more seeding nozzles 76 as the working unit(s) 61a. In the present embodiment, four seeding nozzles 76 are arranged in the width direction, as illustrated in FIG. 9B. Specifically, the distance from widthwise center of one seeding nozzle 76 to the widthwise center of another seeding nozzle 76 adjacent to the one seeding nozzle 76 is the first interval x, and the seeding nozzles 76 are arranged such that the widthwise centers thereof are arranged at first interval(s) x.

Furthermore, the seed spreader 75 includes compacting rollers 77, and the compacting rollers 77 are provided at positions corresponding to the seeding nozzles 76. In the present embodiment, four compacting rollers 77 are arranged rearward of the seeding nozzles 76 apart from one another in the width direction. Specifically, the distance from the widthwise center of one compacting roller 77 to the widthwise center of another compacting roller 77 adjacent to the one compacting roller 77 is the first interval x, and the compacting rollers 77 are arranged such that the widthwise centers thereof are arranged at first interval(s) x. Note that although the seeding nozzles 76 are described as the working units 61a of the seed spreader 75 in the present embodiment, the compacting rollers 77 may be the working units 61a because the seeding nozzles 76 and the compacting rollers 77 are provided at corresponding positions and both the seeding nozzles 76 and the compacting rollers 77 perform work on the agricultural field G.

The seed spreader 75 includes containers 78 in which seeds are contained, hoses (not illustrated) that connect the containers 78 and the seeding nozzles 76, and feeders 79 that feed seeds from the containers 78 through the hoses. Accordingly, seeds fed to the hoses by driving the feeders 79 are sown onto the agricultural field G from the seeding nozzles 76 through the hoses, and the compacting rollers 77 compact at least the portions where the seeds are sown. Since the seed spreader 75 includes the four seeding nozzles 76 and the four compacting rollers 77 in the example illustrated in FIG. 9B, the seed spreader 75 can make four crop lines Rb by being towed by the working machine 1. Note that in a case where the seed spreader 75 includes a single seeding nozzle 76 and a single compacting roller 77, the seed spreader 75 makes one crop line Rb by being towed by the working machine 1, and in a case where the seed spreader 75 includes one pair of seeding nozzles 76 and one pair of compacting rollers 77, the seed spreader 75 makes two crop lines Rb by being towed by the working machine 1.

Note that in the seed spreader 75 illustrated in FIG. 9B, the working width W is the sum of the second width We and the distance from the left edge of the spreading range of the seeding nozzle 76 on one of the opposite sides (left side) in the width direction to the right edge of the spreading range of the seeding nozzle 76 on the other of the opposite sides (right side) in the width direction.

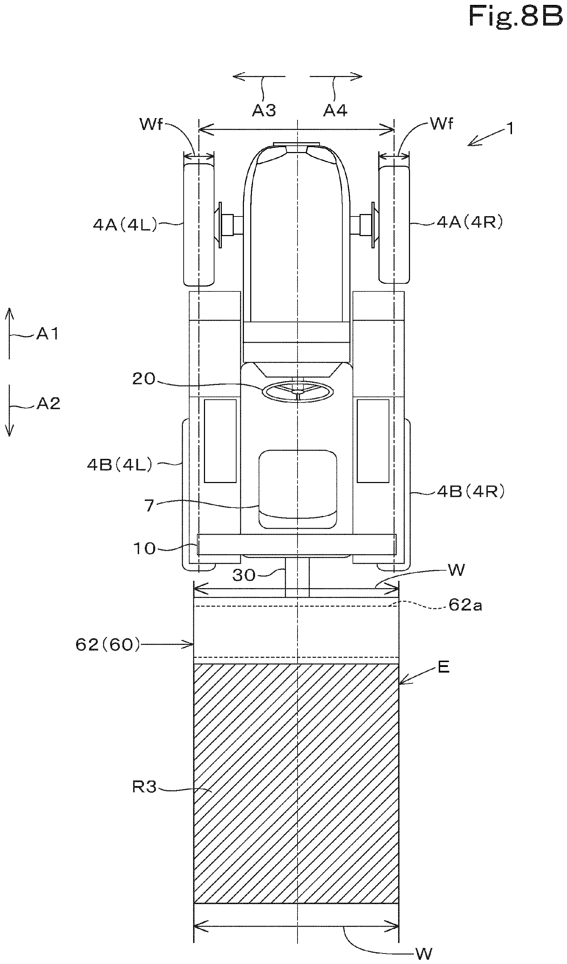

The type II device 62 is the working device 60 that does work not directly interfering with soil in the agricultural field G where ridges have been formed and/or planting has been completed. As illustrated in FIG. 8B, the type II device 62 includes a single working body 62a, unlike the type I device 61. The working body 62a is a structure that does ground work on the agricultural field G and forms a work region R3 extending in the traveling direction of the working machine 1 when the type II device 62 is towed by the working machine 1. It is noted here that the working width W of the type II device 62 and the dimension of the work region R3 in the width direction are the same, and the work region R3 and the unit work section E match. That is, the type II device 62 does work in the entire unit work section E without forming a region where work is done (work line R1) and a region where work is not done in the unit work section E, unlike the type I device 61.

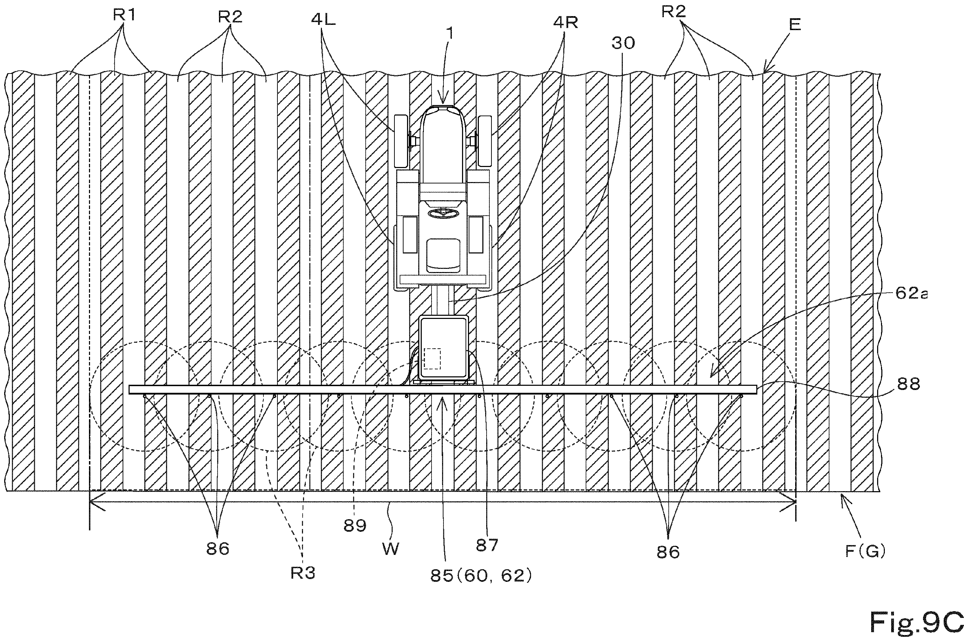

The type II device 62 is described below based on the agricultural chemical spreader 85 illustrated in FIG. 9C as an example. The agricultural chemical spreader 85 includes a plurality of agricultural chemical nozzles 86 as the working body 62a, and the plurality of agricultural chemical nozzles 86 are arranged in the width direction. The plurality of agricultural chemical nozzles 86 are arranged at interval(s) equal to or different from the first intervals x, and perform spreading in a relatively large range without forming a region where work is done (work line R1) and a region where work is not done in the entire unit work section E irrespective of the positions of ridges or crops.

The agricultural chemical spreader 85 includes a tank 87 in which agricultural chemical is stored, a frame 88 to hold the tank 87, and a spreading pump 89 to supply the agricultural chemical from the tank 87 to the agricultural chemical nozzles 86. The plurality of agricultural chemical nozzles 86 are attached to a support member that protrudes leftward or rightward from a rear portion of the frame 88 such that they are arranged at predetermined intervals. The frame 88 is obtained by combining vertical and horizontal members. The agricultural chemical spreader 85 can spread an agricultural chemical such as an agricultural chemical by ejecting the agricultural chemical from the tank 87 through the agricultural chemical nozzles 86 by driving the spreading pump 89.

In the agricultural chemical spreader 85, the working width W is the distance from the left end of the spreading range of the agricultural chemical nozzle 86 on one of opposite sides (left side) in the width direction to the right end of the spreading range of the agricultural chemical nozzle 86 on the other of the opposite sides (right side) in the width direction as illustrated in FIG. 9C.

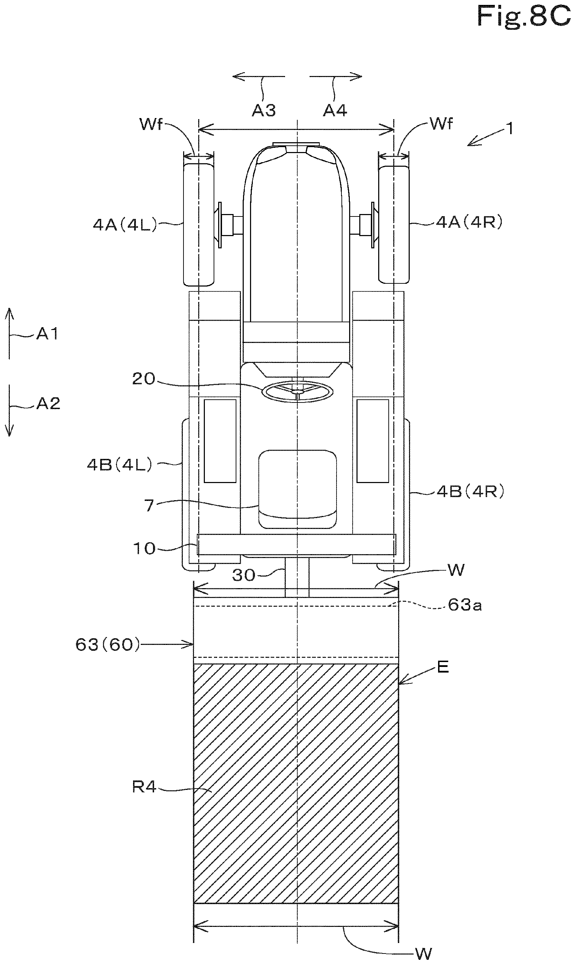

The type III device 63 is the working device 60 that directly interferes with soil irrespective of the presence or absence of ridges or crop lines, such as the cultivator 90. As illustrated in FIG. 8C, the type III device 63 includes a single working body 63a, as with the type II device 62, unlike the type I device 61. The working body 63a is a structure that does ground work on the agricultural field G and forms a work region R4 extending in the traveling direction of the working machine 1 when the type II device 62 is towed by the working machine 1. It is noted here that the working width W of the type III device 63 and the dimension of the work region R4 in the width direction are the same, and the work region R3 and the unit work section E match. That is, the type III device 63 does work in the entire unit work section E without forming a region where work is done (work line R1) and a region where work is not done in the unit work section E, as with the type II device 62, unlike the type I device 61.

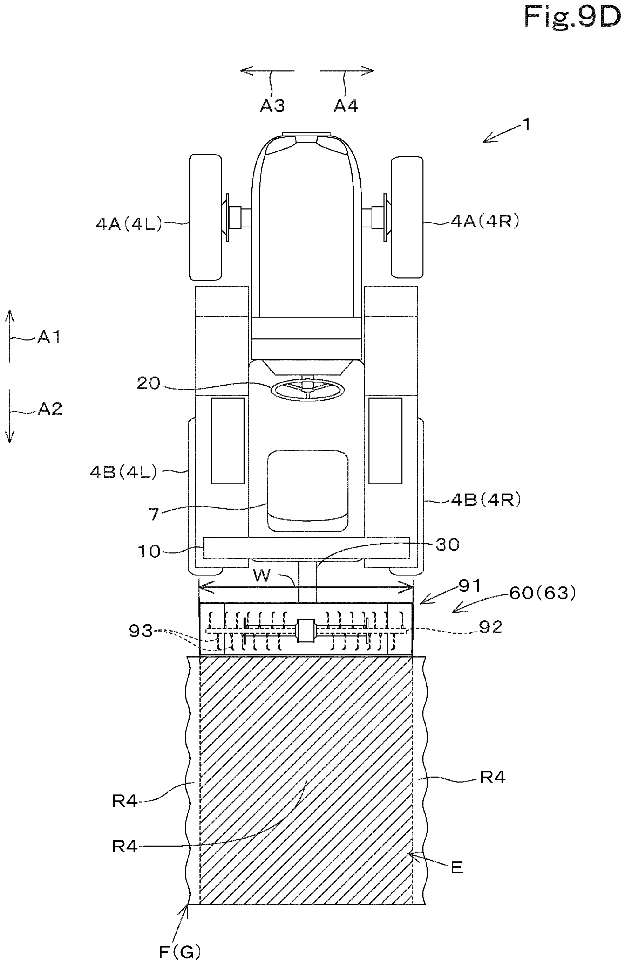

The type III device 63 is described below based on the cultivator 90 illustrated in FIG. 9D as an example. The cultivator 90 includes a tine shaft 91 and tillage tines 92. The tine shaft 91 includes a rotary axis extending in the width direction and performs tillage by being driven by power output from the PTO shaft 6. The tillage tines 92 are attached to the tine shaft 91 and rotate about the axis of the tine shaft 91 to do plowing and harrowing. The tillage tines 92 are provided over the range from one of opposite ends (left end) of the tine shaft 91 in the width direction to the other of the opposite ends (right end) of the tine shaft 91 in the width direction and each extend radially outward from the axis of the tine shaft 91.

In the cultivator 90 illustrated in FIG. 9D, the working width W is the dimension from one of opposite ends (left end) of the cultivator 90 in the width direction to the other of the opposite ends (right end) of the cultivator 90 in the width direction.

It is noted here that, in general, in a case where crop is grown in the agricultural field G, work is done using a plurality of different working devices 60 based on a work schedule within a certain period (e.g., one year or several months), in some cases. In the following description, work done in the agricultural field G at a certain point in time (n, n = 1, 2, 3, ..., n) within the certain period is referred to as first work Jn, and the working device 60 connected to the working machine 1 when the first work Jn is done is referred to as a first working device 60A. Work done before the first work Jn is referred to as second work Jn-1, and the working device 60 connected to the working machine 1 when the second work Jn-1 is done is referred to as a second working device 60B.

Note that the working width W of the first working device 60A is referred to as a first working width Wa, and the working width W of the second working device 60B is referred to as a second working width Wb. In a case where the first working device 60A is the type I device 61, the working unit(s) 61a of the first working device 60A is/are referred to as first working unit(s) 61a1. In a case where the second working device 60B is the type I device 61, the working unit(s) 61a of the second working device 60B is/are referred to as second working unit(s) 61a2.

The first work Jn, the second work Jn-1, and the others are described based on an example case where potato is grown in the agricultural field G. A series of work for growing potato is done in the order of fertilization J1, harrowing J2, pest control J3, ridge making J4, plating J5, weedkilling J6, ridging J7, disbudding J8, additional fertilization J9, pest control J10, and harvesting J11 in the agricultural field G (note that the flow is merely an example, and may vary depending on the type or configuration of the working device 60 connected to the working machine 1 or growth state).

That is, in a case where the first work Jn is the ridge making J4 in the agricultural field G, the first working device 60A is the ridge maker 71, and the second work Jn-1 is any of or all of the fertilization J1, the harrowing J2, and the pest control J3 in the agricultural field G. In such a case, the second working device 60B is the working device 60 corresponding to the second work Jn-1. For example, in a case where the second work Jn-1 is the fertilization J1, the second working device 60B is a fertilizer spreader. In a case where the first work Jn is the harvesting J11, the first working device 60A is a harvester, and the second work Jn-1 is any of or all of the fertilization J1, the harrowing J2, the pest control J3, the ridge making J4, the plating J5, the weedkilling J6, the ridging J7, the disbudding J8, the additional fertilization J9, and the pest control J10 done in the agricultural field G. That is, the first work Jn of the first working device 60A and the second work Jn-1 of the second working device 60B are directly or indirectly related.

As described earlier, in general, the interval(s) between the ridgers 72 of the ridge maker 71, interval(s) between the scattering nozzles of the fertilizer spreader, interval(s) between the seeding nozzles 76 of the seed spreader 75, interval(s) between hoppers of the transplanters, and the like are set to any interval(s) (the first interval(s) x) in advance to match each other so that the positions of ridges and crops correspond, and the dimension (the second width) We of the ground contact surface of the traveling device 4 in the width direction is set according to the width (the first width) Wd of the work line R1 and the first interval(s) x so that the traveling device 4 can travel while avoiding the work line(s) R1.

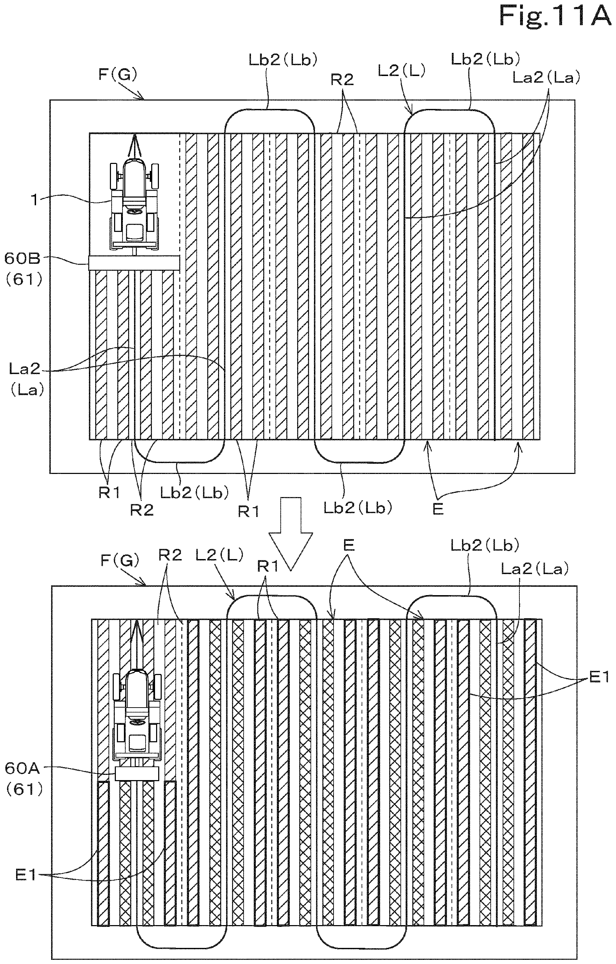

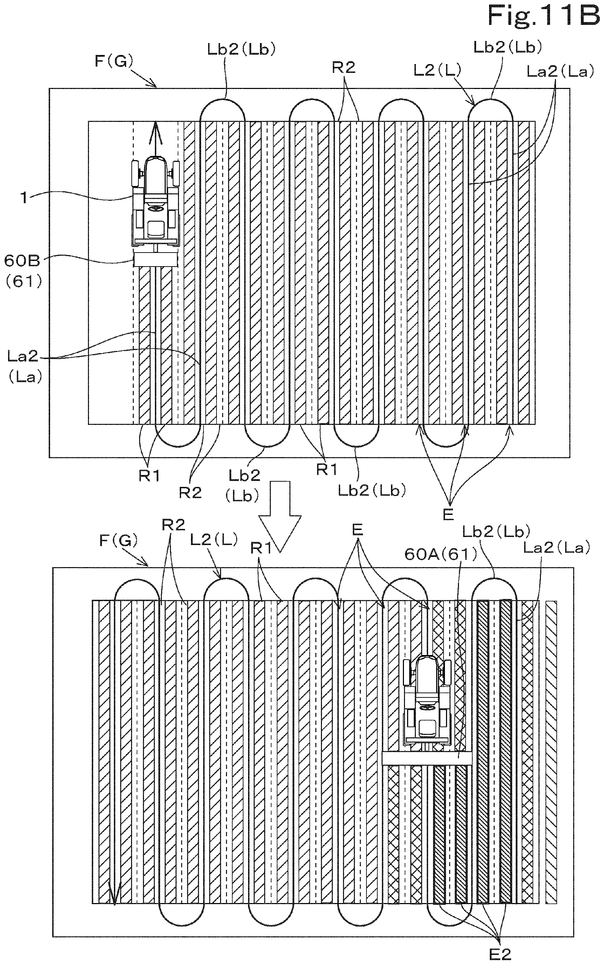

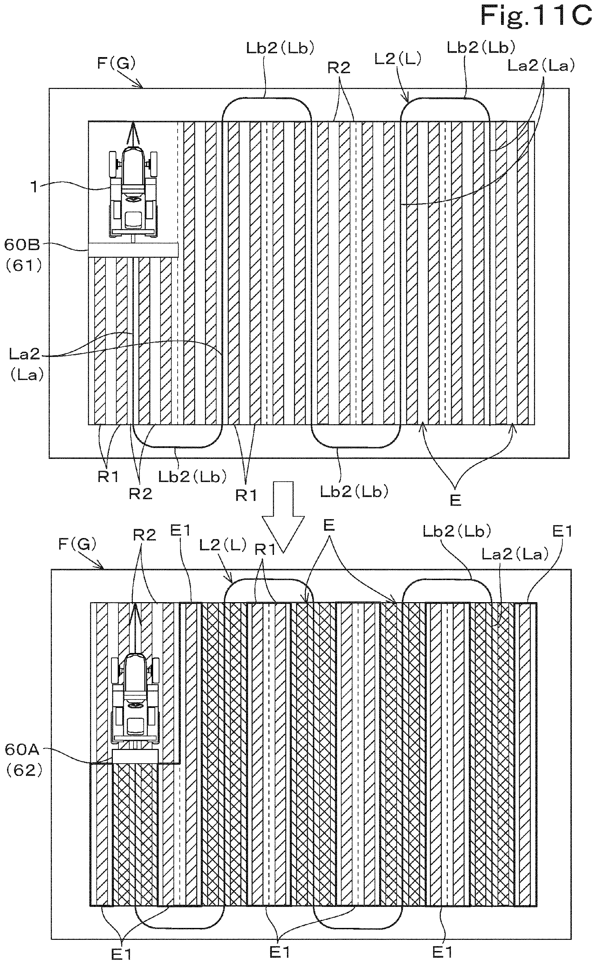

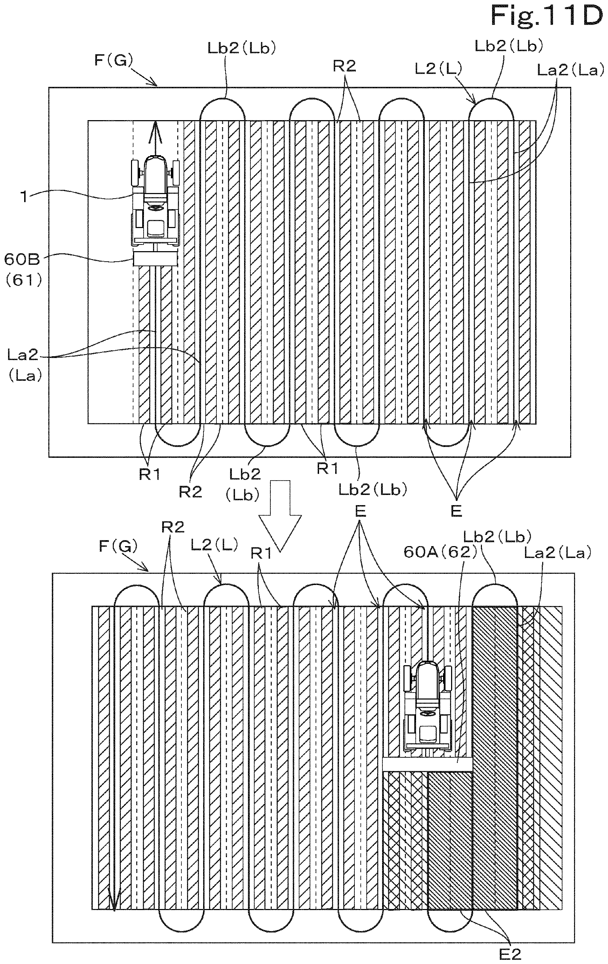

However, for example, assume that the first working device 60A and the second working device 60B differ from each other in the number of working units 61a arranged in the width direction or in the working width W, such as a case where the second working device 60B is the ridge maker 71 illustrated in FIG. 9A and the first working device 60A is the seed spreader 75 illustrated in FIG. 9B. In such cases, if the working machine 1 having the first working device 60A connected thereto causes the first working device 60A to do the first work Jn while traveling along the same path as the path (reference route L2) along which the working machine 1 travels when the second working device 60B does the second work Jn-1, there occurs an unworked region (unfinished region E1) where work is not done or an overworked region (overlapping work region E2) where work is done twice or more when the first work Jn is done, as illustrated in FIGS. 11A, 11B, 11C, and 11D. Note that for convenience of description, in FIGS. 11A to 11D, a region where only the first work Jn has been done, a region where only the second work Jn-1 has been done, and a region where both the first work Jn and the second work Jn-1 have been done are represented by different meshes, and the unfinished region E1 and the overlapping work region E2 are defined by thick lines. The overlapping work region E2 is represented by a finer mesh than other regions.

Specifically, for example, in a case where the number of first working units 61a1 is smaller than the number of second working units 61a2 such as a case where the first working device 60A is the type I device 61 and the number of first working units 61a1 is two and the second working device 60B is the type I device 61 and the number of second working units 61a2 is four, if the working machine 1 having the first working device 60A linked thereto travels along the reference route L2 and the first working device 60A does the first work Jn, there occurs an unfinished region E1 as illustrated in FIG. 11A.

In a case where the number of first working units 61a1 is larger than the number of second working units 61a2 such as a case where the first working device 60A is the type I device 61 and the number of first working units 61a1 is four and the second working device 60B is the type I device 61 and the number of second working units 61a2 is two, if the working machine 1 having the first working device 60A linked thereto travels along the reference route L2 and the first working device 60A does the first work Jn, there occurs an overlapping work region E2, as illustrated in FIG. 11B. Furthermore, the first working unit 61a1 does work outside the work line R1 where the second working unit 61a2 has done work.

In a case where the first working device 60A is the type II device 62, the second working device 60B is the type I device 61, and the first working width Wa is smaller than the second working width Wb, if the working machine 1 having the first working device 60A thereto travels along the reference route L2 and the first working device 60A does the first work Jn, there occurs an unfinished region E1, as illustrated in FIG. 11C.

In a case where the first working device 60A is the type II device 62, the second working device 60B is the type I device 61, and the first working width Wa is larger than the second working width Wb, if the working machine 1 having the first working device 60A connected thereto travels along the reference route L2 and the first working device 60A does the first work Jn, there occurs an overlapping work region E2, as illustrated in FIG. 11D. Furthermore, the working body 62a does work outside the work line R1 where the second working unit 61a2 has done work.

In view of this, the route creator 57d includes a second creator 57d2 instead of or in addition to the first creator 57d1, and the second creator 57d2 can create a travel route L (first route L1) for the first work Jn based on the second work Jn-1. Specifically, the second creator 57d2 creates the travel route L for the first work Jn based on the travel route L for the second work Jn-1 and second information of the second working device 60B. For convenience of description, the travel route L (reference route L2) for the second work Jn-1 may be hereinafter referred to as a second route L2, and the travel route L for the first work Jn may be hereinafter referred to as a first route L1. In other words, the second route L2 is a route along which the vehicle body 2 having the second working device 60B connected thereto moves, that is, a path for the second work, and the first route L1 is a route along which the vehicle body 2 having the first working device 60A connected thereto moves, that is, a path for the first work. In such a case, a section line La of the first route L1 is referred to as a first portion La1, and a section line La of the second route L2 is referred to as a second portion La2.

More specifically, the second creator 57d2 can create the first route L1 based on a plurality of non-travelable lines R1 extending from one of opposite edges to the other of the agricultural field G (in the first direction B 1) and arranged at first interval(s) x. In the present embodiment, the plurality of non-travelable lines R1 are, for example, work lines R1 where work has been done at first interval(s) x from one of opposite edges to the other of the agricultural field G. The second creator 57d2 (route creator 57d) creates the first route L1 based on the plurality of non-travelable lines R1 (work lines R1) extending from one of opposite edges to the other of the agricultural field G (in the first direction B1) and arranged at first interval(s) x. In other words, the second creator 57d2 (route creator 57d) creates the first route L1 that prevents or reduces occurrence of the unfinished region E1 and the overlapping work region E2 as the travel route L for the first work Jn based on work in the preceding step.

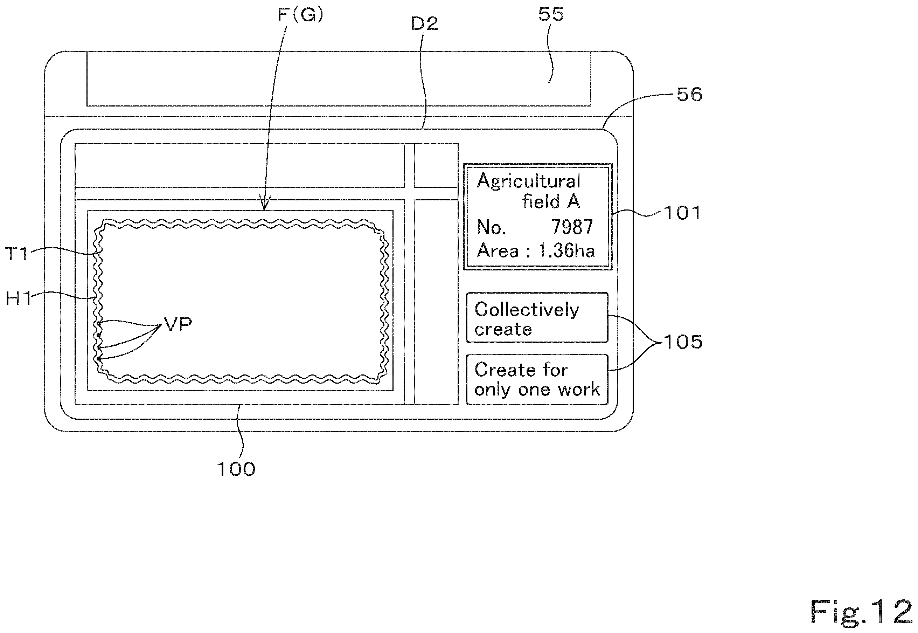

In the present embodiment, the route creator 57d switches between creation of the travel route L using the first creator 57d1 and creation of the travel route L using the second creator 57d2 in accordance with the state of the agricultural field G, that is, a work schedule within a certain period, and the status of a work plan. Specifically, in a case where the operator performs a certain operation on the display 55, the display controller 57 causes a selection screen D2 to be displayed on the display unit 56, as illustrated in FIG. 12. The route creator 57d can switch between a "first mode" in which the first route L1 and the second route L2 are collectively created by the first creator 57d1 and the second creator 57d2 and a "second mode" in which only the second route L2 is created by a second creation mode by referring to the second work Jn-1. The selection screen D2 includes a selection portion 105, and receives the operation of selecting the "first mode" or the "second mode" when the operation for selection is performed on the selection portion 105.

The following details the creation of the first route L1 using the second creator 57d2.

As illustrated in FIG. 1, the working machine 1 includes a first work acquirer 57e, a second work acquirer 57f, a route acquirer 57g, a first acquirer 57h, and a determiner 57i. The display controller 57 of the display 55 also functions as the first work acquirer 57e, the second work acquirer 57f, the route acquirer 57g, and the determiner 57i. Note that although the display controller 57 of the display 55 also functions as the first work acquirer 57e, the second work acquirer 57f, the route acquirer 57g, and the determiner 57i in the present embodiment, the controller 40 or the like may include the first work acquirer 57e, the second work acquirer 57f, the route acquirer 57g, and the determiner 57i, and the configuration thereof is not limited to the above configuration.

The first work acquirer 57e acquires first information of the first working device 60A. The first information is information such as information unique to the first working device 60A and/or information relating to the first work Jn done by the first working device 60A. Specifically, for example, the first work acquirer 57e acquires, as the first information, the first working width (second interval) Wa and the number c1 of first working units 61a1. Note that the first information acquired by the first work acquirer 57e is not limited to the first working width Wa and the number c1 of first working units 61a1, and information such as type, individual information, and model name of the first working device 60A, the unit working width Wc of the first working unit 61a1, the first interval x, and/or date and time of the first work may be acquired as the first information in addition to the first working width Wa and the number c1 of first working units 61a1. In the present embodiment, the first work acquirer 57e acquires, as the first information, information such as the type, individual information, and model name of the first working device 60A, the unit working width Wc, and the first interval x in addition to the first working width Wa and the number c1 of first working units 61a1. For convenience of description, a feature of the first work acquirer 57e that acquires the first working width (second interval) Wa may be hereinafter referred to as a second acquirer 57e1.

The second work acquirer 57f acquires the second information of the second working device 60B. The second information is information such as information unique to the second working device 60B and/or information relating to the second work Jn-1 done by the second working device 60B. Specifically, for example, the second work acquirer 57f acquires, as the second information, the second working width Wb and the number c2 of second working units 61a2. Note that the second information acquired by the second work acquirer 57f is not limited to the second working width Wb and the number c2 of second working units 61a2, and information such as type, individual information, and model name of the second working device 60B, the unit working width Wc, the first interval x, and/or date and time of the second work may be acquired as the second information in addition to the second working width Wb and the number c2 of second working units 61a2. In the present embodiment, the second work acquirer 57f acquires, as the second information, information such as the type, the individual information, and the model name of the second working device 60B, the unit working width Wc, and the first interval x in addition to the second working width Wb and the number c2 of second working units 61a2.

The route acquirer 57g acquires the second route L2. The route acquirer 57g acquires, as the second route L2, a travel route L corresponding to the second work Jn-1 among travel route(s) L created by the route creator 57d or, in a case where the travel route L corresponding to the second work Jn-1 is stored in a storage region of the controller 40 or the like, acquires the travel route L as the second route L2 from the storage region. In the present embodiment, the route acquirer 57g acquires at least a plurality of second portions La2 of the second route L2. Although the second route L2 acquired by the route acquirer 57g is a travel route L created by the first creator 57d1 in the present embodiment, the second route L2 may be a travel route L created by the second creator 57d2. Furthermore, the route acquirer 57g may acquire the second route L2 based on the vehicle body position(s) VP acquired by the position acquirer 57a. In such a case, the position detector 50 detects positions (vehicle body positions VP) of the working machine 1 during the second work, and the position acquirer 57a acquires the vehicle body positions VP in association with time information relating to the times of the detection of the vehicle body positions VP by the position detector 50. The route acquirer 57g, for example, defines the second route L2 by connecting together the vehicle body positions VP acquired by the position acquirer 57a based on the time information to acquire the defined second route L2.

The first acquirer 57h acquires the non-travelable lines R1. Specifically, in the present embodiment, the first acquirer 57h defines positional information of the work lines R1 based on the number c2 of second working units 61a2, the unit working width Wc, and the first interval x acquired by the second work acquirer 57f and the second route L2 acquired by the route acquirer 57g to acquire, for example, data of the non-travelable lines R1 indicated by positions (latitude and longitude) or data of the non-travelable lines R1 indicated by a coordinate (X axis and Y axis) system. More specifically, the first acquirer 57h acquires data of the work lines R1 indicated by positions (latitude and longitude) and/or data of the work lines R1 indicated by a coordinate (an X axis and a Y axis) system based on the second portion(s) La2 acquired by the route acquirer 57g and the number c2 of second working units 61a2, the unit working width Wc, the first interval x, and the second portion La2 acquired by the second work acquirer 57f.

Note that, although the first acquirer 57h defines the work lines R1 based on the number of second working units 61a2, the unit working width Wc, and the first interval x acquired by the second work acquirer 57f and the second route L2 acquired by the route acquirer 57g to acquire the non-travelable lines R1 in the above embodiment, a method of acquiring the non-travelable lines R1 is not limited to the above method. In a case where the non-travelable lines R1 (work lines R1) are stored in advance in a storage region such as the display storing unit 58 or an external server directly or indirectly communicable with the display 55 or the controller 40, the non-travelable lines R1 may be acquired from the storage region.

The determiner 57i determines whether the second working device 60B is the type I device 61, the type II device 62, or the type III device based on the second information acquired by the second work acquirer 57f. The determiner 57i determines whether the second working device 60B is the type I device 61, the type II device 62, or the type III device based on the type of second working device 60B included in the second information. Specifically, a storage region such as the display storing unit 58 or an external server directly or indirectly communicable with the display 55 or the controller 40 stores a table indicating the combination of the type of working device 60 and whether the working device 60 is the type I device 61, the type II device 62, or the type III device, and the determiner 57i determines whether the second working device 60B is the type I device 61, the type II device 62, or the type III device based on the second information and the table. In a case where the second work acquirer 57f acquires, as the second information, information indicative of whether the second working device 60B is the type I device 61, the type II device 62, or the type III device, the determiner 57i determines whether the second working device 60B is the type I device 61, the type II device 62, or the type III device based on the information.

Note that the determination method is not limited to the above method, as long as the determiner 57i can determine whether the second working device 60B is the type I device 61, the type II device 62, or the type III device.

As illustrated in FIG. 1, the second creator 57d2 includes a line definer 157a and a setter 157b. In other words, the route creator 57d includes the line definer 157a and the setter 157b.

The line definer 157a defines a plurality of travelable lines R2, which are regions other than the plurality of non-travelable lines R1 in the agricultural field G, based on the plurality of non-travelable lines R1 acquired by the first acquirer 57h. This is described based on an example case where the second working device 60B is the ridge maker 71 illustrated in FIG. 9A. Since the second working device 60B of FIG. 9A includes two working units 61a, if the working machine 1 travels from one of opposite edges to the other and from the other of the opposite edges to the one of the opposite edges of the agricultural field G (in the first direction B 1) five times, that is, if the second route L2 includes ten section lines La, twenty work lines R1 are formed and twenty-one travelable lines R2 are formed as illustrated in FIG. 13A.

Next, a case where the second working device 60B is the seed spreader 75 illustrated in FIG. 9B is described as an example. Since the second working device 60B of FIG. 9B includes four working units 61a, if the working machine 1 travels from one of the opposite edges to the other and from the other of the opposite edges to the one of the opposite edges of the agricultural field G (in the first direction B 1) 2.5 times, that is, if the second route L2 includes five section lines La, twenty work lines R1 are formed and twenty-one travelable lines R2 are formed as illustrated in FIG. 13B.

In the present embodiment, the first acquirer 57h acquires, as the plurality of non-travelable lines R1, positional information of the plurality of work lines R1, and the line definer 157a acquires regions other than the work lines R1 based on the positional information of the plurality of work lines R1 and the field F registered in the display storing unit 58 by referring to the field F. Accordingly, the line definer 157a calculates positional information of the regions other than the plurality of work lines R1 in the field F based on the positional information of the plurality of work lines R1 and the field F to define a plurality of travelable lines R2.

The setter 157b sets, as the first portions La1, a path which extends from one of opposite edges to the other of the agricultural field G (in the first direction B1) and along which the traveling device 4 travels on the plurality of travelable lines R2, based on the plurality of travelable lines R2 defined by the line definer 157a. That is, the setter 157d can regard, as a candidate for the first portions La1, a path along the travelable lines R2 other than the travelable lines R2 corresponding to the second portions La2, in addition to the second portions La2. The setter 157b sets the first portions La1 in the following manner: the setter 157b extracts travelable lines R2 from the plurality of travelable lines R2, and sets the first portions La1 corresponding to the extracted travelable lines R2.

As described earlier, the travel route L (section lines La) and the travelable lines R2 are in such a relationship that in a case where one travelable line R2 is selected from the plurality of travelable lines R2, the travel route L (section lines La) traveled by the first traveling unit 4L or the second traveling unit 4R when it travels along the travelable line R2 can be defined, and in a case where the travel route L (section lines La) is selected, travelable lines R2 traveled by the first traveling unit 4L and the second traveling unit 4R when the working machine 1 travels along the travel route L (section lines La) can be defined. Accordingly, in setting the first portions La1, the setter 157b selects the second portions La2 acquired by the route acquirer 57g (in other words, extracts the travelable lines R2 corresponding to the second portions La2), extracts the travelable lines R2 corresponding to the first portions La1 by shifting the second portions La2, and thus sets the first portions La1.

Specifically, the setter 157b (route creator 57d) shifts the plurality of second portions La2 in a direction perpendicular to the plurality of second portions La2 based on the first information acquired by the first work acquirer 57e and the second information acquired by the second work acquirer 57f. More specifically, the setter 157b (route creator 57d) shifts the plurality of second portions La2 based on the difference between the first working width Wa acquired by the first work acquirer 57e and the second working width Wb acquired by the second work acquirer 57f. More specifically, the setter 157b (route creator 57d) shifts the plurality of second portions La2 by about a natural number multiple of 1/2 of the difference between the first working width Wa acquired by the first work acquirer 57e and the second working width Wb acquired by the second work acquirer 57f.

The setter 157b shifts the plurality of second portions La2 in the order from the second portion La2 located at one of opposite edges (right edge) in the second direction B2 to the second portion La2 located at the other of the opposite edges (left edge) in the second direction B2 (m = 1, 2, 3 ... m). In the present embodiment, the setter 157b shifts the plurality of second portions La2 starting from the rightmost second portion La2 on the drawing. Specifically, the setter 157b calculates a shift amount based on the following expression (1).
[Math. 1]

$$(w_a - w_b)\left(m - \frac{1}{2}\right) \qquad \cdots \ (1)$$

Accordingly, when the setter 157b sets the plurality of first portions La1 by shifting the plurality of second portions La2 by the shift amount calculated by the above expression, the interval between two adjacent first portions La1 of the plurality of first portions La1 is substantially equal to the second interval Wa. That is, the setter 157b sets the plurality of first portions La1 based on the second interval Wa included in the first information acquired by the second acquirer 57e1 so that the interval between two adjacent first portions La1 is substantially equal to the second interval Wa.

In a case where both the first working device 60A and the second working device 60B are the type I devices 61, the first working width Wa and the second working width Wb are equal to about a natural number multiple of the first interval x, and therefore the setter 157b can calculate the shift amount based on the number $c_2$ of second working units 61a2 acquired by the second work acquirer 57f and the number $c_1$ of first working units 61a1 acquired by the first work acquirer 57e. Specifically, the setter 157b (route creator 57d) calculates the shift amount based on the difference between the number $c_1$ of first working units 61a1 and the number $c_2$ of second working units 61a2 and the first interval x. More specifically, the setter 157b (route creator 57d) calculates the shift amount based on the product of the difference between the number $c_1$ of first working units 61a1 and the number $c_2$ of second working units 61a2, the first interval x, and a natural number multiple of 1/2 using the following expression (2).
[Math. 2]

$$x(c_1 - c_2)\left(m - \frac{1}{2}\right) \qquad \cdots \ (2)$$

That is, according to the above expression (2), in a case where the number $c_1$ of first working units 61a1 and the number $c_2$ of second working units 61a2 are even numbers, that is, in a case where the difference between the number $c_1$ of first working units 61a1 and the number $c_2$ of second working units 61a2 is a multiple of 2, the shift amount is an integer multiple of the first interval x.

The setter 157b calculates the shift amount based on any of the above calculation expressions and shifts the plurality of second portions La2. Note that in a case where the first working width Wa is larger than the second working width Wb (Wb < Wa) and the number $c_2$ of second working units 61a2 is larger than the number $c_1$ of first working units 61a1 (c2 < c1), that is, in a case where the shift amount calculated using the expression (1) or (2) is a positive number, the setter 157b shifts the plurality of second portions La2 by the shift amount from one of the opposite edges (right edge) toward the other (left edge) in the second direction B2. In the present embodiment, in a case where the shift amount calculated using the expression (1) or (2) is a positive number, the setter 157b shifts the plurality of second portions La2 leftward in the drawing by the shift amount.

If all the second portions La2 are shifted in the above case (Wb < Wa), the shifted second portions La2 (first portions La1) are located outside the contour of the agricultural field G. Therefore, the setter 157b shifts as many second portions La2 as a greatest common measure of the first working width Wa and the dimension of the agricultural field G in the second direction B2 among the plurality of second portions La2, and the route creator 57d connects adjacent first portions La1 to form a first turning portion Lb1.

On the other hand, in a case where the second working width Wb is larger than the first working width Wa (Wa < Wb) and in a case where the number $c_1$ of first working units 61a1 is larger than the number $c_2$ of second working units 61a2 (c1 < c2), that is, in a case where the shift amount calculated using the expression (1) or (2) is a negative number, the setter 157b shifts the plurality of second portions La2 by the shift amount from the other of the opposite edges (left edge) toward the one edge (right edge) of the second direction B2. In the present embodiment, in a case where the shift amount calculated using the expression (1) or (2) is a negative number, the setter 157b shifts the plurality of second portions La2 rightward in the drawing by the shift amount.

It is noted here that, even if all the second portions La2 are shifted in the above case (Wa < Wb), there occurs a region where no first portion La1 is set in the field F. Accordingly, the setter 157b not only sets the first portions La1 by shifting the second portions La2, but also newly creates first portions La1 spaced apart from one another by the first working width Wa on the travelable lines R2. Specifically, the setter 157b newly creates as many first portions La1 as the difference between (i) the greatest common measure of the first working width Wa and the dimension of the agricultural field G in the second direction B2 and (ii) the number of second portions La2, and the second creator 57d2 connects adjacent first portions La1 to form a first turning portion Lb1. In this way, the route creator 57d (second creator 57d2) creates the first route L1.

This is described based on an example case where the first working device 60A is the ridge maker 71 illustrated in FIG. 9A and the second working device 60B is the seed spreader 75 illustrated in FIG. 9B. Since the first working device 60A and the second working device 60B are the type I devices 61, the setter calculates the shift amount based on the expression (2). Since the number $c_1$ of first working units $61a1$ is two and the number of second working units $61a2$ is four, i.e., since the number $c_2$ of second working units $61a2$ is larger than the number $c_1$ of first working units $61a1$ and therefore the shift amount calculated based on the expression (2) is a negative number, and the setter 157b shifts the plurality of second portions La2 rightward in the drawing by the shift amount.

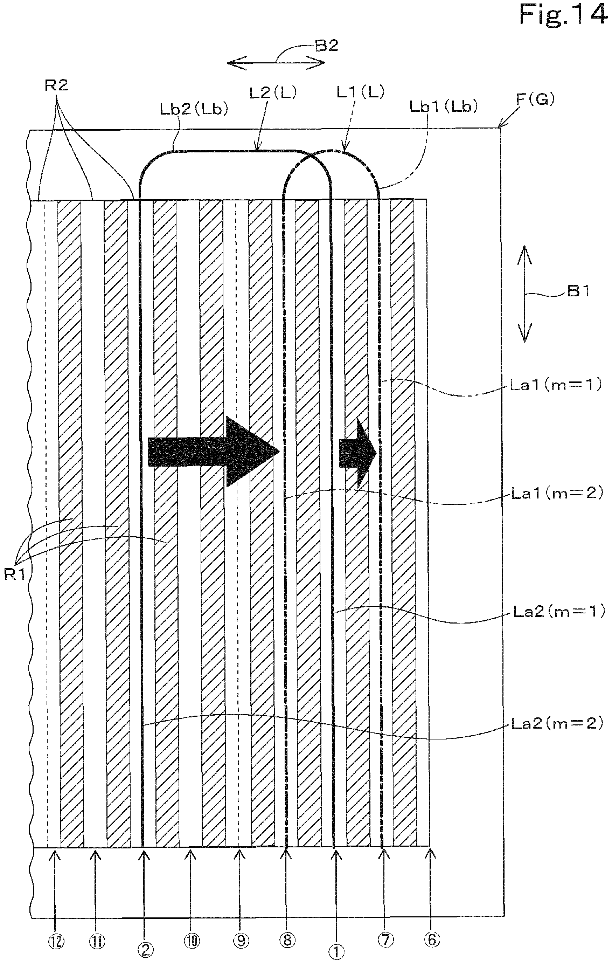

First, the setter 157b sets the first portions La1 by sequentially shifting the plurality of second portions La2 of the second route L2 from the second portion La2 (m = 1) located at one of opposite edges (rightmost second portion) in the second direction B2. The setter 157b calculates the shift amount of the second portion La2 (m = 1) to be equal (negative number) to the first interval x using the expression (2). With this, as illustrated in FIG. 14, the setter 157b sets the first portion La1 (m = 1) by shifting the second portion La2 (m = 1) rightward in the drawing by the first interval x.

After the setter 157b sets the first portion La1 (m = 1) by shifting the second portion La2 (m = 1), the setter 157b shifts the second portion La2 (m = 2) located inward of the second portion La2 (m = 1). The setter 157b calculates the shift amount of the second portion La2 (m = 2) to be equal (negative number) to a value that is three times as large as the first interval x using the expression (2). With this, as illustrated in FIG. 14, the setter 157b sets the first portion La1 (m = 2) by shifting the second portion La2 (m = 2) rightward on the drawing by the value three times as large as the first interval x.

After the setter 157b shifts the second portion La2 (m = 5), the setter 157b newly creates as many first portions La1 as the difference (five) between the greatest common measure (ten) of the first working width Wa and the dimension of the agricultural field G in the second direction B2 and the number (five) of second portions La2, and the second creator 57d2 connects adjacent first portions La1 to form a first turning portion Lb1.

In this way, the setter 157b extracts the travelable lines R2 that reduce the unfinished region E1 and the overlapping work region E2 so that the unfinished region E1 and the overlapping work region E2 would not be generated and thus sets the first portions La1 based on the working width W included in the first information acquired by the first work acquirer 57e.

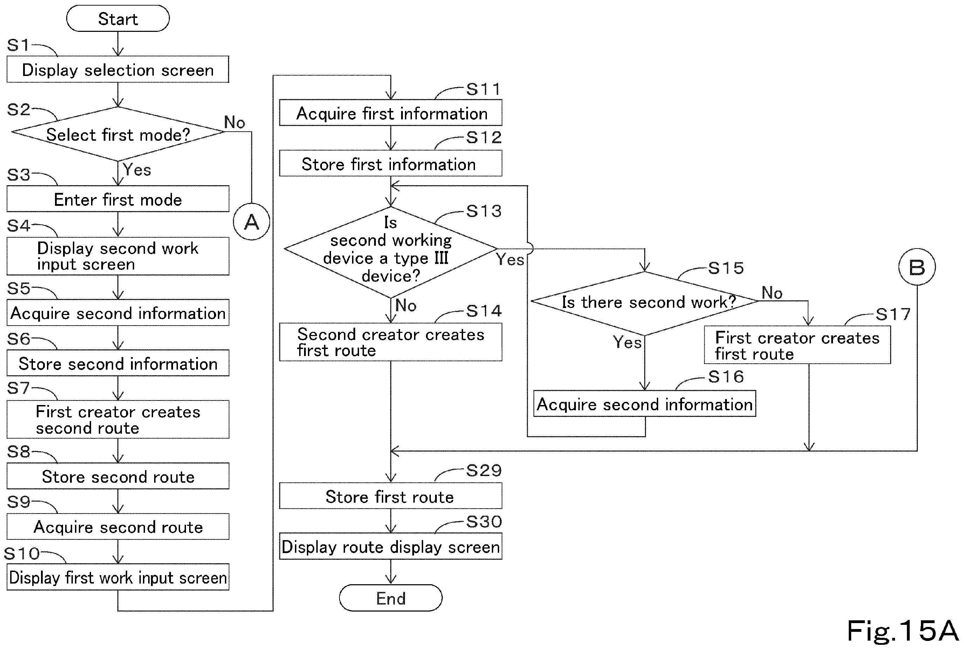

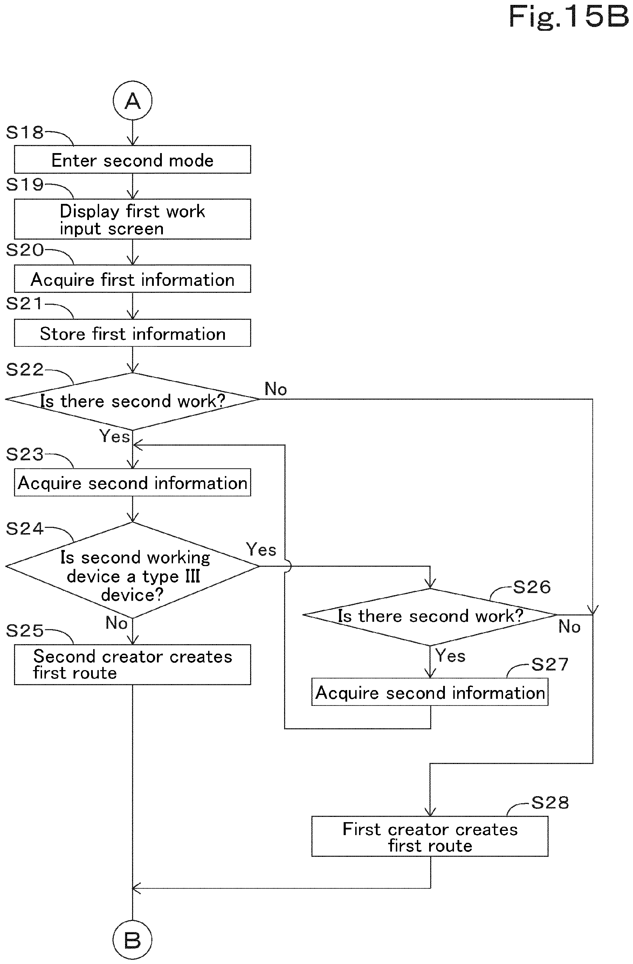

The following describes acquisition of the second information by the second work acquirer 57f, acquisition of the first information by the first work acquirer 57e, and the like in the first mode and the second mode in accordance with a flow mainly with reference to FIGS. 15A and 15B.

As illustrated in FIG. 15A, in a case where the first mode is selected by a selecting operation (S2, Yes) while the selection screen D2 is displayed on the display 55 (S1), the route creator 57d enters the first mode (S3).

After the route creator 57d enters the first mode (S3), the display controller 57 causes a second work input screen D3 to be displayed on the display unit 56 (S4). The second work input screen D3 is a screen to receive input of information of the second working device 60B and includes a first input portion 110 to receive input of the second information.

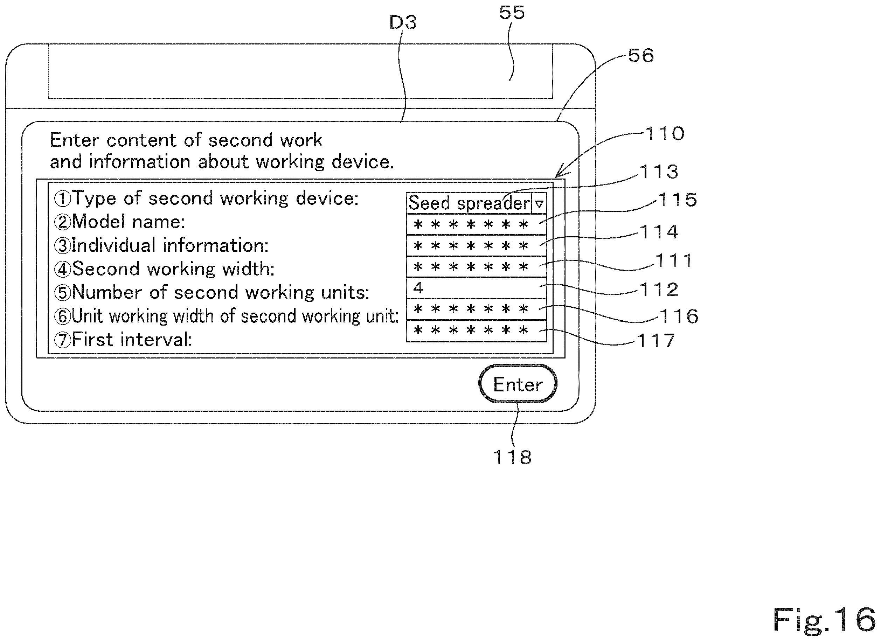

As illustrated in FIG. 16, the first input portion 110 includes a first region 111 to receive input of the second working width Wb, a second region 112 to receive input of the number $c_2$ of second working units $61a2$, a third region 113 to receive input of the type of second working device 60B, a fourth region 114 to receive input of individual information of the second working device 60B, a fifth region 115 to receive input of the model name of the second working device 60B, a sixth region 116 to receive input of the unit working width Wc of the second working unit $61a2$, and a seventh region 117 to receive input of the first interval x of the second working device 60B. The first region 111, the second region 112, the sixth region 116, and the seventh region 117 receive input of numerical values, for example, by an operation of the display 55. The third region 113, the fourth region 114, and the fifth region 115 receive input of text, for example, by an operation of the display 55.

Note that in a case where the second working device 60B is the type II device 62 or the type III device 63, no information is input in the second region 112, and the second work acquirer 57f does not acquire the number $c_2$ of second working units $61a2$. Although the second work acquirer 57f acquires the second information including the second working width Wb and the number $c_2$ of second working units $61a2$ based on the information input on the screen of the display unit 56, a method of inputting the second information is not limited to the above method, and the source of acquisition of the second information is not limited to information input to the second work input screen D3. For example, the second work input screen D3 may receive input of the model of the working device 60, and the second work acquirer 57f may acquire the second information from a table stored in advance in the display storing unit 58. In such a case, the second information is stored as a table including the model of the working device 60, and the second information is acquired using the model of the working device 60 as individual information. Alternatively, the second work acquirer 57f may acquire the second information including the second working width Wb and the number c2 of second working units 61a2 based on an image taken by an imager provided in or on the working machine 1 and/or information detected by a detector such as a sensor.

In a case where the second information is input on the second work input screen D3 and a first Enter button 118 of the second work input screen D3 is selected, the second work acquirer 57f acquires the second information including the second working width Wb and the number c2 of second working units 61a2 input to the second work input screen D3 (S5).

As illustrated in FIG. 15A, when the second work acquirer 57f acquires the second information (S5), the acquired second information is stored in the display storing unit 58 (S6). When the second information is stored in the display storing unit 58 (S6), the first creator 57d1 (route creator 57d) creates the second route L2 based on the second information acquired by the second work acquirer 57f (S7). When the first creator 57d1 creates the second route L2 (S7), the display storing unit 58 stores the second route L2 therein (S8).

When the first creator 57d1 (route creator 57d) creates the second route L2 (S7) and the second route L2 is stored in the display storing unit 58 (S8), the route acquirer 57g acquires the second route L2 created by the first creator 57d1 from the display storing unit 58 (S9). When the route acquirer 57g acquires the second route L2 (S9), the display controller 57 causes a first work input screen D4 to be displayed on the display unit 56 (S10).

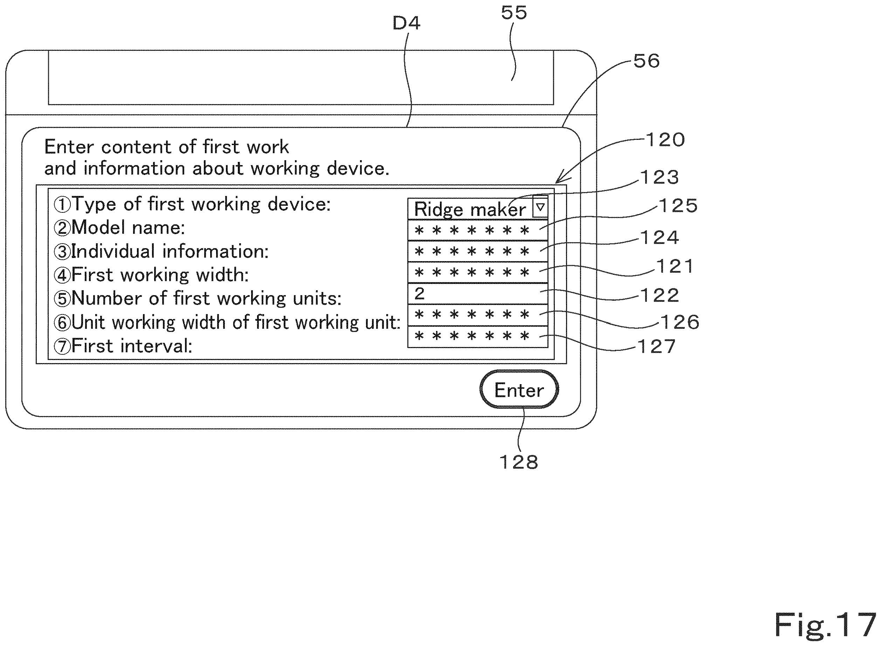

The first work input screen D4 is a screen to receive input of information of the first working device 60A and includes a second input portion 120 to receive input of the first information, as illustrated in FIG. 17. The second input portion 120 includes an eighth region 121 to receive input of the first working width (second interval) Wa, a ninth region 122 to receive input of the number c1 of first working units 61a1, a tenth region 123 to receive input of the type of first working device 60A, an eleventh region 124 to receive input of the individual information of the first working device 60A, a twelfth region 125 to receive input of the model name of the first working device 60A, a thirteenth region 126 to receive input of the unit working width Wc of the first working unit 61a1, and a fourteenth region 127 to receive input of the first interval x of the first working device 60A. The eighth region 121, the ninth region 122, the thirteenth region 126, and the fourteenth region 127 receive numerical values, for example, by an operation of the display 55. The tenth region 123, the eleventh region 124, and the twelfth region 125 receive input text, for example, by an operation of the display 55.

Note that in a case where the first working device 60A is the type II device 62 or the type III device 63, no information is input in the ninth region 122, and the first work acquirer 57e does not acquire the number c1 of first working units 61a1. Although the first work acquirer 57e acquires the first information including the first working width Wa and the number c1 of first working units 61a1 based on the information input on the screen of the display unit 56, a method of inputting the first information is not limited to the above method, and the source of acquisition is not limited to the information input on the first work input screen D4. For example, the first work input screen D4 may receive input of the model of the working device 60, and the first work acquirer 57e may acquire the first information from a table stored in advance in the display storing unit 58. In such a case, the first information is stored as a table including the model of the working device 60, and the first information is acquired using the model of the working device 60 as individual information. Alternatively, the first work acquirer 57e may acquire the first information including the first working width Wa and the number c1 of first working units 61a1 based on an image taken by an imager provided in or on the working machine 1 and/or information detected by a detector such as a sensor.

In a case where the first information is input to the first work input screen D4 and a second Enter button 128 of the first work input screen D4 is selected, the first work acquirer 57e acquires the first information including the first working width Wa and the number c1 of first working units 61a1 input to the first work input screen D4 (S11).

As illustrated in FIG. 15A, when the first work acquirer 57e acquires the first information (S11), the acquired first information is stored in the display storing unit 58 (S12). When the first information is stored in the display storing unit 58 (S12), the determiner 57i determines whether the second working device 60B corresponding to the second work Jn-1 is the type III device 63 based on the second information corresponding to the second route L2 (S13).

In a case where the determiner 57i determines that the second working device 60B is not the type III device 63, that is, in a case where the determiner 57i determines that the second working device 60B is the type I device 61 or the type II device 62 (S13, No), the second creator 57d2 (route creator 57d) creates the first route L1 based on the first information acquired by the first work acquirer 57e, the second information acquired by the second work acquirer 57f, and the second route L2 acquired by the route acquirer 57g (S14). In other words, the second creator 57d2 (route creator 57d) creates the first route L1 based on the first information acquired by the first work acquirer 57e, the second information acquired by the second work acquirer 57f, and the second route L2 acquired by the route acquirer 57g in a case where the non-travelable lines R1 are formed in the agricultural field G.

On the other hand, in a case where the determiner 57i determines that the second working device 60B is the type III device 63 (S13, Yes), the second work acquirer 57f checks whether or not the second information of the second work Jn-2 preceding the second work Jn-1 subjected to determination by the determiner 57i in S12 is stored in the display storing unit 58 (S15). In a case where the second work acquirer 57f confirms that the second information of the second work Jn-2 preceding the second work Jn-1 subjected to determination by the determiner 57i in S 13 is stored (S15, Yes), the second work acquirer 57f acquires the second information of the second work Jn-2 from the display storing unit 58 (S16). When the second work acquirer 57f acquires the second information of the second work Jn-2 from the display storing unit 58, the process returns to S 13 in which the determiner 57i determines whether the second working device 60B corresponding to the second work Jn-2 is the type III device 63 (S13).

Note that in a case where the second work acquirer 57f confirms that the second information of the second work Jn-2 preceding the second work Jn-1 subjected to determination by the determiner 57i in S13 or S16 is not stored in the display storing unit 58 (S15, No), the first creator 57d1 creates the first route L1 based on the first information acquired by the first work acquirer 57e (S17).

As shown in FIGS. 15A and 15B, when the second mode is selected in S 1 (S2, No), the route creator 57d shifts to a flow of the second mode (S18).

After the route creator 57d shifts to the second mode (S18), the display controller 57 causes the first work input screen D4 to be displayed on the display unit 56 (S19). In a case where the first information is input to the first work input screen D4 and the second Enter button 128 of the first work input screen D4 is selected, the first work acquirer 57e acquires the first information including the first working width Wa and the number c1 of first working units 61a1 input to the first work input screen D4 (S20).

As shown in FIG. 15B, after the first work acquirer 57e acquires the first information (S20), the acquired first information is stored in the display storing unit 58 (S21). After the first information is stored in the display storing unit 58 (S21), the second work acquirer 57f checks whether or not the second information of the second work Jn-1 preceding the first work Jn for which the first information was acquired in S20 is stored in the display storing unit 58 (S22). In a case where the second work acquirer 57f confirms that the second information of the second work Jn-1 preceding the first work Jn for which the first information was acquired in S22 is stored (S22, Yes), the second work acquirer 57f acquires the second information of the second work Jn-1 from the display storing unit 58 (S23). After the second work acquirer 57f acquires the second information from the display storing unit 58 (S23), the determiner 57i determines whether the second working device 60B corresponding to the second work Jn-1 is the type III device 63 (S24).

In a case where the determiner 57i determines that the second working device 60B corresponding to the second information is not the type III device 63, that is, in a case where the determiner 57i determines that the second working device 60B is the type I device 61 or the type II device 62 (S24, No), the second creator 57d2 creates the first route L1 based on the first information acquired by the first acquirer 57h, the second information acquired by the second acquirer 57e1, and the second route L2 (S25). In other words, the second creator 57d2 (route creator 57d) creates the first route L1 based on the first information acquired by the first work acquirer 57e, the second information acquired by the second work acquirer 57f, and the second route L2 acquired by the route acquirer 57g in a case where the non-travelable lines R1 are formed in the agricultural field G.

On the other hand, in a case where the determiner 57i determines that the second working device 60B corresponding to the second information is the type III device 63 (S24, Yes), the second work acquirer 57f checks whether or not the second information of the second work Jn-2 preceding the second work Jn-1 subjected to determination by the determiner 57i in S22 is stored in the display storing unit 58 (S26). In a case where the second work acquirer 57f confirms that the second information of the second work Jn-2 preceding the second work Jn-1 subjected to determination by the determiner 57i in S24 is stored (S26, Yes), the second work acquirer 57f acquires the second information of the second work Jn-2 from the display storing unit 58 (S27). After the second work acquirer 57f acquires the second information from the display storing unit 58 (S27), the process returns to S24, in which the determiner 57i determines whether the second working device 60B corresponding to the second work Jn-2 is the type III device 63 (S24).

Note that in a case where the second work acquirer 57f confirms that the second information of the second work Jn-1 is not stored in the display storing unit 58 (S22, No) or confirms that the second information of the second work Jn-2 preceding the second work Jn-1 acquired in S23 or S27 is not stored in the display storing unit 58 (S26, No), the first creator 57d1 creates the first route L1 based on the first information acquired by the second acquirer 57e1 (S28).

As shown in FIGS. 15A and 15B, when the first route L1 is created in S14, S17, S25, or S28, the display storing unit 58 stores the first route L1 therein (S29). When the display storing unit 58 stores the first route L1 in therein (S29) or a predetermined operation is performed, the display controller 57 causes a route display screen D5 to be displayed on the display unit 56 and the second route L2 and the first route L1 stored in the display storing unit 58 to be displayed (S30).

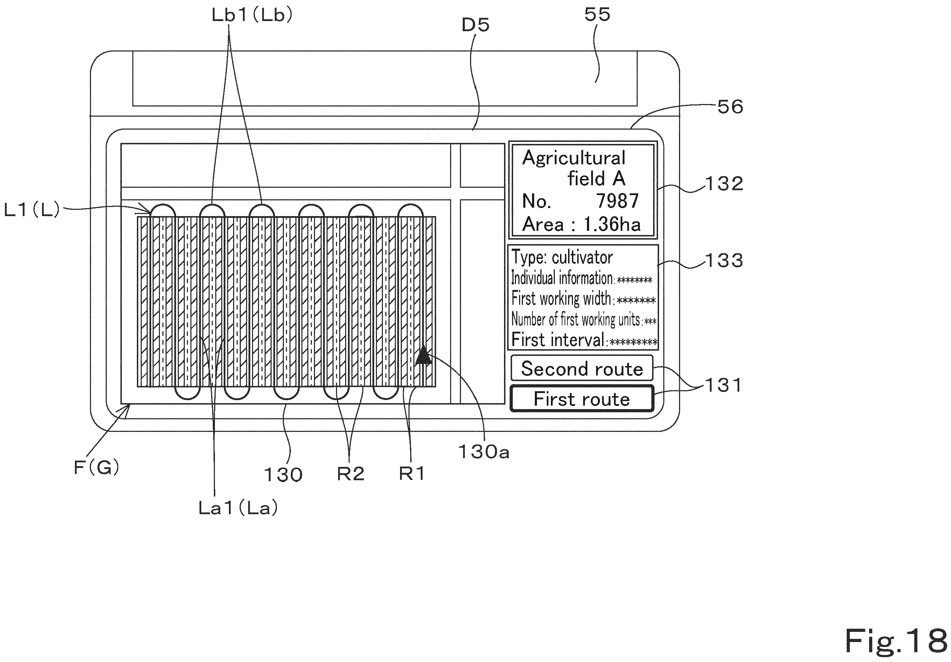

As illustrated in FIG. 18, the route display screen D5 includes, for example, a route display portion 130 where the second route L2 and the first route L1 are displayed in a selectable manner, a switching button 131 to switch display of the route display portion 130, a second information display portion 132 to display agricultural field identification information such as the name (agricultural field name) and an agricultural field management number of the agricultural field G, and a third information display portion 133 where detailed information of work performed in the agricultural field G is displayed. The route display portion 130 displays the field F registered by the field register 57b and displays the second route L2 or the first route L1 on the field F in response to an operation of the switching button 131.

The display controller 57 acquires the vehicle body position VP detected by the position detector (positioning device) 50 and causes the current position of the working machine 1 to be displayed as an icon 130a on the route display portion 130 based on the vehicle body position VP. The third information display portion displays the first information acquired by the first work acquirer 57e or the second information acquired by the second work acquirer 57f in response to an operation of the switching button 131. In the present embodiment, for example, the third information display portion displays, as the first information, information such as the first working width Wa, the number c1 of first working units 61a1, the type, individual information, and model name of the first working device 60A, the unit working width Wc of the first working unit 61a1, and/or the first interval x and displays, as the second information, information such as the second working width Wb, the number c2 of second working units 61a2, the type, individual information, and model name of the second working device 60B, the unit working width Wc of the second working unit 61a2, and/or the first interval x.

Note that the above flow in which the route creator 57d creates the first route L1 is merely an example. Although the first creator 57d1 creates the second route L2 (S7), the second route L2 is stored in the display storing unit 58 (S8), the route acquirer 57g acquires the second route L2 (S9), and the display controller 57 causes the first work input screen D4 to be displayed on the display unit 56 (S10) in the present embodiment, the following configuration may be used: when the second work acquirer 57f acquires the second information (S5), the display controller 57 causes the first work input screen D4 to be displayed on the display unit 56 (S10), and after the first work acquirer 57e acquires the first information (S11), the first creator 57d1 creates the second route L2 (S7).

For example, in the present embodiment, in a case where the determiner 57i determines in S13 and S24 that the second working device 60B corresponding to the second information is the type III device 63 (S13, S24, Yes), the second work acquirer 57f repeats steps S13, S15, and S16 or steps S24, S26, and S27 and checks whether or not the second information of the second work preceding the second work Jn-2 is stored in the display storing unit 58 (S26) until it is determined that the second working device 60B corresponding to the second information is not the type III device 63 (S13, S24, No) or until it is determined that the second information of the second work Jn-2 preceding the second work Jn-1 is not stored in the display storing unit 58 (S15, S26, Yes). However, in a case where the first information acquired by the first work acquirer 57e includes date and time of the first work, the second information acquired by the second work acquirer 57f includes date and time of the second work, and an interval between the second work and the first work is equal to or longer than a predetermined number of days, the process may proceed to S17 from S15 or the process may proceed to S28 from S26. Alternatively, in a case where the determiner 57i determines whether the second working device 60B corresponding to the second work Jn-2 is the type III device 63 and the second working device 60B corresponding to the second work Jn-2 is the type III device 63 (S13, S24, No), in other words, in a case where the second working device 60B corresponding to the work (second work) Jn-2 which precedes the work immediately preceding the first work Jn is the type III device 63, the process may proceed to S17 from S15 or the process may proceed to S28 from S26.

Although a case where the route creator 57d collectively creates the first route L1 and the second route L2 has been described as an example in the above embodiment, the route creator 57d may create a travel route L (third route) traveled by the working machine 1 during third work that is performed after the second work in addition to the first route L1 and the second route L2, and the number of travel routes L collectively created by the route creator 57d is not limited to two and may be three or four.

In the above embodiment, the display 55 causes the travel route L (the second route L2 and the first route L1) created by the route creator 57d to be displayed on the display unit 56. The controller 40 of the working machine 1 may control the traveling device 4 based on the travel route L created by the route creator 57d.

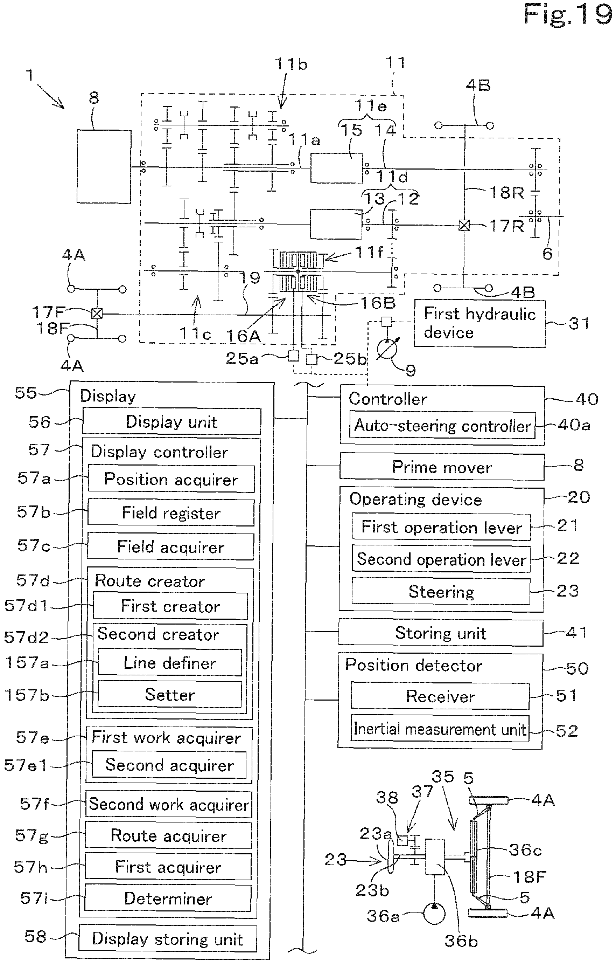

Specifically, for example, in a first variation, the controller 40 includes an auto-steering controller 40a, as illustrated in FIG. 19. The auto-steering controller 40a includes electric/electronic circuit(s) provided in the controller 40, program(s) stored in a CPU and/or the like, and/or the like. The auto-steering controller 40a controls a steering motor 38 of an auto-steering mechanism 37 so that the vehicle body 2 travels along the travel route L based on a control signal output from the controller 40.

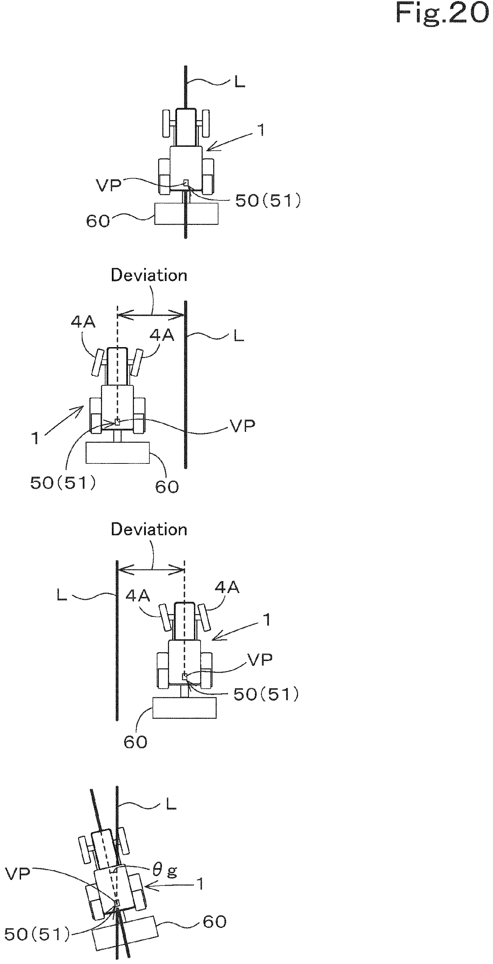

As illustrated in the upper portion of FIG. 20, in a case where the deviation of the position of the vehicle body 2 from the travel route L is less than a predetermined value, the auto-steering controller 40a maintains the angle of rotation of the rotary shaft of the steering motor 38. In a case where the deviation of the position of the vehicle body 2 from the travel route L is equal to or larger than the predetermined value and the working machine 1 is located leftward of the travel route L, the auto-steering controller 40a rotates the rotary shaft of the steering motor 38 so that the working machine 1 is steered rightward. In a case where the deviation of the position of the vehicle body 2 from the travel route L is equal to or larger than the predetermined value and the working machine 1 is located rightward of the travel route L, the auto-steering controller 40a rotates the rotary shaft of the steering motor 38 so that the working machine 1 is steered leftward.

Note that although the rotational angle of the steering 23 is changed based on the deviation of the position of the vehicle body 2 from the travel route L in the above embodiment, the auto-steering controller 40a may set the steering angle so that the angle $\theta g$ of orientation of the vehicle body 2 with respect to the travel route L is zero (so that the orientation of the vehicle body 2 matches the orientation of the travel route L) in a case where the orientation of the travel route L and the orientation of the traveling direction of the working machine 1 (vehicle body 2) (the orientation of the vehicle body 2) are different, that is, in a case where the angle θg is equal to or larger than a predetermined angle, as illustrated in the lower portion of FIG. 20.

The auto-steering controller 40a may set a final steering angle of auto-steering based on a steering angle determined based on deviation (positional deviation) and a steering angle determined based on orientation (orientation deviation). Setting of the steering angle of auto-steering in the above embodiment is an example and is not restrictive.

Although the configuration in which the controller 40 of the working machine 1 controls auto-steering of the working machine 1 has been described in the above embodiment, the controller 40 may also control a vehicle speed of the working machine 1 in addition to the control of the auto-steering mechanism.

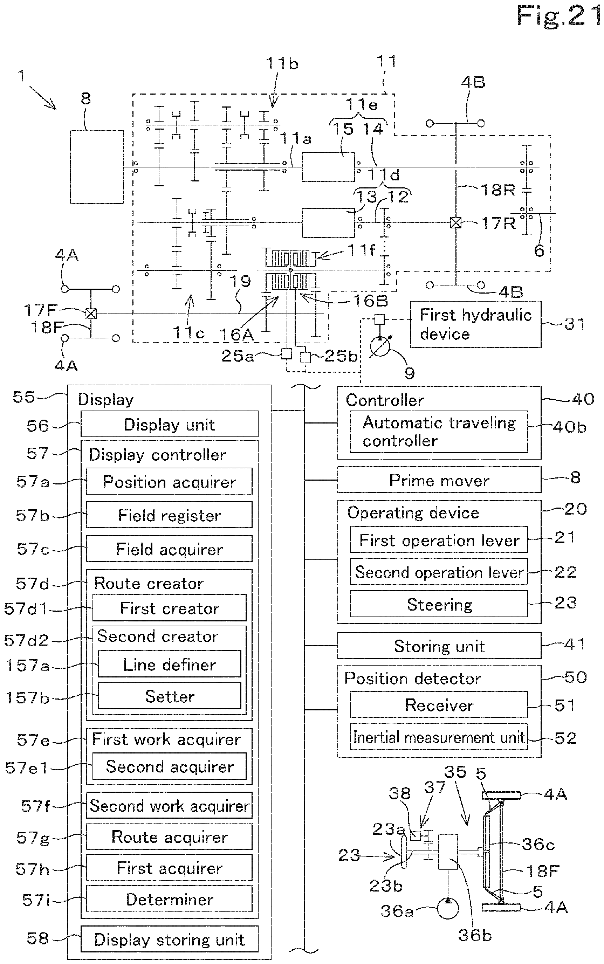

In a second variation, the controller 40 includes an automatic travel controller 40b to control automatic traveling of the working machine 1, as illustrated in FIG. 21. The automatic travel controller 40b includes electric/electronic circuit(s) provided in the controller 40, program(s) stored in a CPU and/or the like, and/or the like. When automatic traveling starts, the automatic travel controller 40b controls the steering motor 38 of the auto-steering mechanism 37 so that the working machine 1 travels along the travel route L. Furthermore, when automatic traveling starts, the automatic travel controller 40b controls the vehicle speed (traveling speed) of the working machine 1 by automatically changing speed stages of the transmission 11, the rotational speed of the prime mover 8, and the like.

After automatic traveling starts, the automatic travel controller 40b controls the traveling speed so that the traveling speed on the section line La and the traveling speed on the turning portion Lb are different. For example, the automatic travel controller 40b sets the traveling speed on the section line La to a speed $\alpha$. On the other hand, the automatic travel controller 40b sets the traveling speed on the turning portion Lb to a speed $\beta$ lower than the speed $\alpha$ ($\beta < \alpha$). Note that the automatic travel controller 40b may divide the section line La into a plurality of sections and set traveling speeds in the sections to different speeds, and control of the traveling speeds is not limited to the above configuration.

The automatic travel controller 40b controls the steering motor 38 of the auto-steering mechanism 37 so that the working machine 1 travels along the travel route L, by a method similar to the auto-steering controller 40a.

A working machine 1 as has been described includes a vehicle body 2, a first working device 60A attachable to the vehicle body 2, a traveling device 4 on the vehicle body 2, a first acquirer 57h to acquire a plurality of non-travelable lines R1 that extend from one of opposite edges of an agricultural field G to the other and are arranged at a first interval or intervals x, and a route creator 57d to create, based on the plurality of non-travelable lines R1 acquired by the first acquirer 57h, a first route L1 including a plurality of first portions La1 to be traveled by the vehicle body 2 and extending from the one of the opposite edges to the other of the agricultural field G, wherein the traveling device 4 includes portions that are spaced apart from each other by a distance corresponding to the first interval x, and the route creator 57d includes a line definer 157a to define, as a plurality of travelable lines R2, regions of the agricultural field G other than the plurality of non-travelable lines R1 based on the plurality of non-travelable lines R1 acquired by the first acquirer 57h, and a setter 157b to set, as the plurality of first portions La1, a path which extends from the one of the opposite edges to the other of the agricultural field G and along which the traveling device 4 travels on the plurality of travelable lines R2, based on the plurality of travelable lines R2 defined by the line definer 157a. With the above configuration, the working machine 1 can travel along the travelable lines R2 while avoiding the non-travelable lines R1, and therefore, in a case where the setter 157b sets the first portions La1 based on the plurality of travelable lines R2, the route creator 57d can create the first portions La1 along which the working machine 1 can travel without entering the non-travelable lines R1. This allows the working machine 1 to efficiently do work in the agricultural field G without traveling on the non-travelable lines R1.

The portions of the traveling device 4 include a first traveling unit 4L provided on the vehicle body 2 and a second traveling unit 4R provided on the vehicle body 2 at a distance from the first traveling unit 4L such that, in a case that the first traveling unit 4L is located on one of the plurality of travelable lines R2, the second traveling unit 4R is located on another of the plurality of travelable lines R2. The setter 157b extracts two travelable lines R2 from the plurality of travelable lines R2 and sets corresponding first portions La1 based on the extracted two travelable lines R2. With the above configuration, the setter 157b can set the first portions La1 corresponding to the travelable lines R2 along which the first traveling unit 4L travels and the travelable lines R2 along which the second traveling unit 4R travels. The setter 157b can therefore more reliably reduce the likelihood that the first traveling unit 4L and the second traveling unit 4R will enter the non-travelable lines R1.

The working machine 1 further includes a second acquirer 57e1 to acquire a second interval Wa which is a first working width Wa. The setter 157b sets the plurality of first portions La1 such that an interval between two adjacent section lines La is substantially equal to the second interval Wa based on the second interval Wa acquired by the second acquirer 57e1. With the above configuration, the setter 157b can eliminate or reduce the likelihood that regions where the first working device 60A does work are separated from each other or overlap each other in a case where the working machine 1 travels along two adjacent section lines La. Therefore, the working machine 1 makes it possible to prevent or reduce the generation of the unfinished regions E1 where the first working device 60A has not done work and the overlapping work regions E2 where the first working device 60A does work twice or more.

The first acquirer 57h acquires, as the plurality of non-travelable lines R1, a plurality of work lines R1 which are arranged at the first interval or intervals x and in which work has been done from the one of the opposite edges to the other of the agricultural field G or from the other of the opposite edges to the one of the opposite edges of the agricultural field G. With the above configuration, the working machine 1 that travels along the first portions La1 can do work without entering the plurality of work lines R1. This allows the working machine 1 to do work more efficiently without damaging regions where work has been done already.

The plurality of work lines R1 acquired as the plurality of non-travelable lines R1 by the first acquirer 57h are ridge lines Ra where ridge making has been done or crop lines Rb where crop seeds have been sown or crops have been planted. With the above configuration, the working machine 1 that travels along the first portions La1 can do work without damaging the ridges or the upper surfaces of the ridges or without damaging sown seeds or grown crops. This allows the working machine 1, by traveling and doing work along the first portions La1, to efficiently do work while eliminating or reducing the likelihood that the growth of seeds and crops will be hindered or the quality of crops will be deteriorated.

The working machine 1 further includes a route acquirer 57g to acquire a second route L2 along which work has been done by the vehicle body 2 in the agricultural field G, a second working device 60B attachable to the vehicle body 2 to do second work before first work done by the first working device 60A, and a linkage 30 to connect the first working device 60A or the second working device 60B to the vehicle body 2. The linkage 30 is operable to connect, to the vehicle body 2, the second working device 60B to do the second work before the first work done by the first working device 60A. The second working device 60B is operable to do work at the first interval or intervals x. The route acquirer 57g acquires, as the second route L2, a plurality of second portions La2 traveled by the vehicle body 2 having the second working device 60B connected thereto and extending from the one of the opposite edges to the other of the agricultural field G. The plurality of non-travelable lines R1 are a plurality of work lines R1 which are arranged at the first interval or intervals x and which result from the vehicle body 2 traveling along the plurality of second portions La2 and the second working device 60B doing the second work from the one of the opposite edges to the other of the agricultural field G or from the other of the opposite edges to the one of the opposite edges of the agricultural field G. The setter 157b sets the plurality of first portions La1 by shifting the second route L2 acquired by the route acquirer 57g based on the plurality of travelable lines R2 defined by the line definer 157a. With the above configuration, the route creator 57d creates the first route L1 including the first portions La1 by changing the second route L2 along which the working machine 1 has done the second work, and therefore the first portions La1 can be easily set while omitting input of various kinds of information included in the second route L2. Furthermore, the work (first work) corresponding to the second work can be more appropriately done.

The working machine 1 further includes a position detector 50 to detect a position of the vehicle body 2, and a display 55 to display the position of the vehicle body 2 detected by the position detector 50 and the first route L1 created by the route creator 57d. With the above configuration, the first route L1 (first portions La1) along which the working machine 1 can travel without entering the non-travelable lines R1 can be displayed. Therefore, the operator, by visually checking the first portions La1 displayed on the display 55, operating the working machine 1 while checking the position of the vehicle body 2, and causing the working machine 1 to travel along the first portions La1 the first route L1, can efficiently do work in the agricultural field G without traveling on the non-travelable lines R1.

The working machine 1 further includes a position detector 50 to detect a position of the vehicle body 2, and an auto-steering controller 40a to control steering of the traveling device 4 based on the position of the vehicle body 2 detected by the position detector 50 and the first route L1 created by the route creator 57d. With the above configuration, the auto-steering controller 40a causes the working machine 1 to travel along the first route L1 (first portions La1) by controlling steering without the need for the operator to steer the working machine 1. This allows the working machine 1 to efficiently do work in the agricultural field G without traveling on the non-travelable lines R1. It is therefore possible to further improve work performance of the working machine 1.

The working machine further includes a position detector 50 to detect a position of the vehicle body 2, and an automatic travel controller 40b to control steering and a vehicle speed of the traveling device 4 based on the position of the vehicle body 2 detected by the position detector 50 and the first route L1 created by the route creator 57d. With the above configuration, the automatic travel controller 40b causes the working machine 1 to travel along the first route L1 (first portions La1) by controlling steering and a vehicle speed without the need for the operator to steer the working machine 1 or control the vehicle speed. This allows the working machine 1 to efficiently do work in the agricultural field G without traveling on the non-travelable lines R1. It is therefore possible to further improve work performance of the working machine 1.

A working machine 1 as has been described includes a vehicle body 2, a first working device 60A attachable to the vehicle body 2 to do first work, a traveling device 4 on the vehicle body 2, a first work acquirer 57e to acquire first information of the first working device 60A, a second work acquirer 57f to acquire second information of a second working device 60B to do second work before the first work, a route acquirer 57g to acquire a second route L2 which is a path for the second work, and a route creator 57d to create a first route L1 which is a path for the first work and includes a plurality of first portions La1 extending from one of opposite ends to the other of an agricultural field G and spaced apart from each other, wherein the route acquirer 57g acquires, as the second route L2, a plurality of second portions La2 extending from the one of the opposite edges to the other of the agricultural field G and spaced apart from each other, and the route creator 57d creates the plurality of first portions La1 by shifting the plurality of second portions La2 in a direction perpendicular to the plurality of second portions La2 based on the first information acquired by the first work acquirer 57e and the second information acquired by the second work acquirer 57f. With the above configuration, the route creator 57d can create the first route L1 including the first portions La1 by shifting the second portions La2 which are a path along which the second work has been done, that is, by changing the second route L2. Therefore, the first route L1 (first portions La1) can be easily created while omitting input of various kinds of information included in the second route L2. Furthermore, work (first work) corresponding to the second work can be done more appropriately.

The plurality of first portions La1 are arranged at equal intervals. The plurality of second portions La2 are arranged at equal intervals different from the intervals at which the plurality of first portions are arranged. With the above configuration, it is possible to prevent or reduce the generation of the unfinished regions E1 and the overlapping work regions E2 both in the case of the first work and in the case of the second work.

The first work acquirer 57e acquires a first working width Wa of the first working device 60A as the first information. The second work acquirer 57f acquires a second working width Wb of the second working device 60B as the second information. The route creator 57d creates the first portions La1 by shifting the plurality of second portions La2 based on a difference between the first working width Wa acquired by the first work acquirer 57e and the second working width Wb acquired by the second work acquirer 57f. With the above configuration, the route creator 57d can locate the first portions La1 at positions corresponding to the first working width Wa when creating the first portions La1 by shifting the second portions La2. That is, it is possible to eliminate or reduce the likelihood that regions where the first working device 60A does work are separated from each other or overlap each other when the working machine 1 travels along the first portions La1. Therefore, the working machine 1, by traveling along the first portions La1, makes it possible to prevent or reduce the generation of the unfinished regions E1 where the first working device 60A has not done work and the overlapping work regions E2 where the first working device 60A does work twice or more.

The route creator 57d creates the first portions La1 by shifting the plurality of second portions La2 by a product of (i) the difference between the first working width Wa acquired by the first work acquirer 57e and the second working width Wb acquired by the second work acquirer 57f and (ii) a natural number multiple of 1/2. With the above configuration, the working machine 1 can prevent or reduce the generation of the unfinished region E1 of the first working device 60A and the overlapping work region E2 of the first working device 60A easily by a simple method.

The first working device 60A includes a first working unit 61a1 or a plurality of first working units 61a1 arranged at a first interval or intervals x in a width direction. The second working device 60B includes a second working unit 61a2 or a plurality of second working units 61a2 arranged at the first interval or intervals x in the width direction. The first work acquirer 57e acquires the number c1 of first working units 61a1 as the first information. The second work acquirer 57f acquires the number c2 of second working units 61a2 as the second information. The route creator 57d creates the plurality of first portions La1 by shifting the plurality of second portions La2 based on (i) a difference between the number c1 of first working units 61a1 acquired by the first work acquirer 57e and the number c2 of second working units 61a2 acquired by the second work acquirer 57f and (ii) the first interval x. With the above configuration, the route creator 57d can locate the first portions La1 at positions corresponding to the first working units 61a1 and the second working units 61a2 when creating the first portions La1 by shifting the second portions La2. That is, in a case where the working machine 1 travels along the first portions La1, the first working units 61a1 can do work reliably at positions where the second working units 61a2 have done work. This makes it possible to eliminate or reduce the likelihood that regions where the first working device 60A does work are separated from each other or overlap each other in a case where the working machine 1 travels along the first portions La1.

The route creator 57d creates the plurality of first portions La1 by shifting the plurality of second portions La2 by a product of (i) the difference between the number c1 of first working units 61a1 acquired by the first work acquirer 57e and the number c2 of second working units 61a2 acquired by the second work acquirer 57f, (ii) the first interval x, and (iii) a natural number multiple of 1/2. With the above configuration, the working machine 1 can prevent or reduce the generation of the unfinished regions E1 of the first working device 60A and the overlapping work regions E2 of the first working device 60A reliably by a simple method.

The first work acquirer 57e acquires a first working width Wa of the first working device 61A as the first information. The route creator 57d creates the second route L2 based on the first working width Wa. The route acquirer 57g acquires the second route L2 created by the route creator 57d. With the above configuration, in a case where the working machine 1 travels along the second route L2, generation of the unfinished region E1 where the second working device 60B has not done work and the overlapping work region E2 where the second working device 60B does work twice or more can be prevented or reduced, and the route creator 57d can create the first route L1 of high work efficiency easily based on the second route L2 of high work efficiency.

The working machine 1 further includes a position detector 50 to detect a position of the vehicle body 2. The route acquirer 57g acquires the second route L2 based on one or more positions of the vehicle body 2 acquired by the position detector 50 when the vehicle body 2 having the second working device 60B connected thereto moves. With the above configuration, the second route L2 can be created when the second work is done, and the working machine 1 can acquire the second route L2 easily and efficiently.

The working machine 1 further includes a position detector 50 to detect a position of the vehicle body 2, and a display 55 to display the position of the vehicle body 2 detected by the position detector 50 and the first route L1 created by the route creator 57d. With the above configuration, the operator, by visually checking the first portions La1 displayed on the display 55, operating the working machine 1 while checking the position of the vehicle body 2 and the first route L1, and causing the working machine 1 to travel along the first portions La1, can efficiently do work in the agricultural field G.

The working machine 1 further includes a position detector 50 to detect a position of the vehicle body 2, and an auto-steering controller 40a to control steering of the traveling device 4 based on the position of the vehicle body 2 detected by the position detector 50 and the first route L1 created by the route creator 57d. With the above configuration, the auto-steering controller 40a causes the working machine 1 to travel along the first route L1 (first portions La1) by controlling steering without the need for the operator to steer the working machine 1. This allows the working machine 1 to efficiently do work in the agricultural field G. It is therefore possible to further improve work performance of the working machine 1.

The working machine 1 further includes a position detector 50 to detect a position of the vehicle body 2, and an automatic travel controller 40b to control steering and a vehicle speed of the traveling device 4 based on the position of the vehicle body 2 detected by the position detector 50 and the first route L1 created by the route creator 57d. With the above configuration, the automatic travel controller 40b causes the working machine 1 to travel along the first route L1 (first portions La1) by controlling the steering and the vehicle speed without the need for the operator to steer the working machine 1 and control the vehicle speed. This allows the working machine 1 to efficiently do work in the agricultural field G. It is therefore possible to further improve work performance of the working machine 1.

The working machine further includes a linkage 30 to selectively connect the first working device 60A or the second working device 60B to the vehicle body 2. The first route L1 is a path traveled by the vehicle body 2 having the first working device 60A attached thereto via the linkage 30. The second route L2 is a path traveled by the vehicle body 2 having the second working device 60B attached thereto via the linkage 30. With the above configuration, in a case where the first work and the second work are done by the same vehicle body 2, the work can be done more appropriately by creating the first route L1 using the second route L2 and causing the vehicle body 2 to do the first work while traveling along the first route L1.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

For example, although a case where the number of working units 61a of the type I device 61 is an even number has been described in the above embodiments, the present invention is also applicable to a case where the number of working units 61a of the type I device 61 is an odd number. In such a case, in a case where both of the first working device 60A and the second working device 60B are the type I device 61, the present invention is applicable to a case where both of the number of first working units 61a1 and the number of second working units 61a2 are odd numbers.

For example, although the work lines R1 are illustrated as an example of the non-travelable lines R1 in the above embodiments, the non-travelable lines R1 are not limited to the work lines R1 and may be, for example, grooves, as long as the non-travelable lines R1 are regions where the traveling device 4 (the first traveling unit 4L, the second traveling unit 4R) cannot enter, extend from one of opposite edges to the other of the agricultural field G (in the first direction B1), and are arranged at first interval(s) x.

Reference Signs List

| 1 | working machine |
| 2 | vehicle body |
| 4 | traveling device |
| 4A | front wheel |
| 4B | rear wheel |
| 30 | linkage |
| 40a | auto-steering controller |

| 40b | automatic traveling controller |
| 50 | position detector |
| 55 | display |
| 57d | route creator |
| 57e1 | second acquirer |
| 57g | route acquirer |
| 57h | first acquirer |
| 60A | first working device |
| 60B | second working device |
| 157a | line definer |
| 157b | setter |
| E1 | unfinished region |
| E2 | overlapping work region |
| G | agricultural field |
| La | section line |
| La1 | first portion |
| La2 | second portion |
| L1 | first route |
| L2 | second route |
| R1 | work line (non-travelable line) |
| R2 | travelable line |
| Ra | ridge line |
| Rb | crop line |
| Wa | first working width (second interval) |
| x | first interval |

**Claims**

1. A working machine comprising:

   a vehicle body;
   a first working device attachable to the vehicle body;
   a traveling device on the vehicle body;
   a first acquirer to acquire a plurality of non-travelable lines that extend from one of opposite edges of an agricultural field to the other and are arranged at a first interval or intervals; and
   a route creator to create, based on the plurality of non-travelable lines acquired by the first acquirer, a first route including a plurality of first portions to be traveled by the vehicle body and extending from the one of the opposite edges to the other of the agricultural field; wherein
   the traveling device includes portions that are spaced apart from each other by a distance corresponding to the first interval; and
   the route creator includes:

      a line definer to define, as a plurality of travelable lines, regions of the agricultural field other than the plurality of non-travelable lines based on the plurality of non-travelable lines acquired by the first acquirer; and
      a setter to set, as the plurality of first portions, a path which extends from the one of the opposite edges to the other of the agricultural field and along which the traveling device travels on the plurality of travelable lines, based on the plurality of travelable lines defined by the line definer.

2. The working machine according to claim 1, wherein

   the portions of the traveling device include a first traveling unit provided on the vehicle body and a second traveling unit provided on the vehicle body at a distance from the first traveling unit such that, in a case that the first traveling unit is located on one of the plurality of travelable lines, the second traveling unit is located on another of the plurality of travelable lines; and
   the setter extracts two travelable lines from the plurality of travelable lines and sets corresponding first portions based on the extracted two travelable lines.

3. The working machine according to claim 1 or 2, further comprising a second acquirer to acquire a second interval which is a working width of the first working device;
wherein the setter sets the plurality of first portions such that an interval between two adjacent straight portions is substantially equal to the second interval based on the second interval acquired by the second acquirer.

4. The working machine according to any one of claims 1 to 3, wherein the first acquirer acquires, as the plurality of non-travelable lines, a plurality of work lines which are arranged at the first interval or intervals and in which work has been done from the one of the opposite edges to the other of the agricultural field or from the other of the opposite edges to the one of the opposite edges of the agricultural field.

5. The working machine according to claim 4, wherein the plurality of work lines acquired as the plurality of non-travelable lines by the first acquirer are ridge lines where ridge making has been done or crop lines where crop seeds have been sown or crops have been planted.

6. The working machine according to any one of claims 1 to 5, further comprising:

   a route acquirer to acquire a second route along which work has been done by the vehicle body in the agricultural field;
   a second working device attachable to the vehicle body to do second work before first work done by the first working device; and
   a linkage to connect the first working device or the second working device to the vehicle body; wherein
   the second working device is operable to do work at the first interval or intervals;
   the route acquirer acquires, as the second route, a plurality of second portions traveled by the vehicle body having the second working device connected thereto and extending from the one of the opposite edges to the other of the agricultural field;
   the plurality of non-travelable lines are a plurality of work lines which are arranged at the first interval or intervals and which result from the vehicle body traveling along the plurality of second portions and the second working device doing the second work from the one of the opposite edges to the other of the agricultural field or from the other of the opposite edges to the one of the opposite edges of the agricultural field; and
   the setter sets the plurality of first portions by shifting the second route acquired by the route acquirer based on the plurality of travelable lines defined by the line definer.

7. The working machine according to any one of claims 1 to 6, further comprising:

   a position detector to detect a position of the vehicle body; and
   a display to display the position of the vehicle body detected by the position detector and the first route created by the route creator.

8. The working machine according to any one of claims 1 to 6, further comprising:

   a position detector to detect a position of the vehicle body; and
   an auto-steering controller to control steering of the traveling device based on the position of the vehicle body detected by the position detector and the first route created by the route creator.

9. The working machine according to any one of claims 1 to 6, further comprising:

   a position detector to detect a position of the vehicle body; and
   an automatic travel controller to control steering and a vehicle speed of the traveling device based on the position of the vehicle body detected by the position detector and the first route created by the route creator.

Fig.1

| 55 | Display |
| --- | --- |
| 56 | Display unit |
| 57 | Display controller |
| 57a | Position acquirer |
| 57b | Field register |
| 57c | Field acquirer |
| 57d | Route creator |
| 57d1 | First creator |
| 57d2 | Second creator |
| 157a | Line definer |
| 157b | Setter |
| 57e | First work acquirer |
| 57e1 | Second acquirer |
| 57f | Second work acquirer |
| 57g | Route acquirer |
| 57h | First acquirer |
| 57i | Determiner |
| 58 | Display storing unit |

| 40 | Controller |
| --- | --- |
| 8 | Prime mover |
| 20 | Operating device |
| 21 | First operation lever |
| 22 | Second operation lever |
| 23 | Steering |
| 41 | Storing unit |
| 50 | Position detector |
| 51 | Receiver |
| 52 | Inertial measurement unit |

First hydraulic device — 31

28

Fig.2

Fig.3

Fig.4A

F(G)

T1

H1

EP 4 393 284 A1

# Fig.4B

F(G)

Turning point　　　　Turning point

T1
H2
K1

32

# Fig.4C

F(G)

Corner

Corner

K2

H3

EP 4 393 284 A1

Fig.5

EP 4 393 284 A1

Fig.6

Fig.7

# Fig.8A

# Fig.8B

# Fig.8C

# Fig.9A

A3   A4

1

4A(4L)                4A(4R)

A1

A2

20

4B(4L)

4B(4R)

7

10                              30

W

73                                              71        60(61)

73b                                           73a

72a                                           72a

72b                                           72c

72                                            72

72c                                           72b

R2                                            R2

R2                                            E

Ra(R1)

F(G)

# Fig.9B

Fig.9C

# Fig.9D

Fig.10

Fig.11A

Fig.11B

Fig.11C

Fig.11D

Fig.12

EP 4 393 284 A1

Fig.13A

Fig.13B

EP 4 393 284 A1

# Fig.14

Start

S1 — Display selection screen

S2 — Select first mode? — No → (A)

Yes

S3 — Enter first mode

S4 — Display second work input screen

S5 — Acquire second information

S6 — Store second information

S7 — First creator creates second route

S8 — Store second route

S9 — Acquire second route

S10 — Display first work input screen

S11 — Acquire first information

S12 — Store first information

S13 — Is second working device a type III device? — Yes →

No

S14 — Second creator creates first route

S15 — Is there second work? — No → S17 First creator creates first route → (B)

Yes

S16 — Acquire second information

S29 — Store first route

S30 — Display route display screen

End

Fig.15A

# Fig.15B

(A)

S18 — Enter second mode

S19 — Display first work input screen

S20 — Acquire first information

S21 — Store first information

S22 — Is there second work? — No

Yes

S23 — Acquire second information

S24 — Is second working device a type III device? — Yes

No

S25 — Second creator creates first route

S26 — Is there second work? — No

Yes

S27 — Acquire second information

S28 — First creator creates first route

(B)

Enter content of second work
and information about working device.

①Type of second working device:    Seed spreader ▽

②Model name:    * * * * * * *

③Individual information:    * * * * * * *

④Second working width:    * * * * * * *

⑤Number of second working units:    4

⑥Unit working width of second working unit:    * * * * * * *

⑦First interval:    * * * * * * *

Enter

Fig.16

EP 4 393 284 A1

Fig.17

EP 4 393 284 A1

Lb1(Lb)

D5

55

56

L1(L)

Agricultural field A
No.      7987
Area : 1.36ha

132

Type: cultivator
Individual information : *******
First working width : *******
Number of first working units : ***
First interval : *********

133

Second route

First route

131

130a

F(G)

130    R2    R1

La1(La)

Fig.18

EP 4 393 284 A1

Fig.19

| 55 | Display |
| 56 | Display unit |
| 57 | Display controller |
| 57a | Position acquirer |
| 57b | Field register |
| 57c | Field acquirer |
| 57d | Route creator |
| 57d1 | First creator |
| 57d2 | Second creator |
| 157a | Line definer |
| 157b | Setter |
| 57e | First work acquirer |
| 57e1 | Second acquirer |
| 57f | Second work acquirer |
| 57g | Route acquirer |
| 57h | First acquirer |
| 57i | Determiner |
| 58 | Display storing unit |

| 40 | Controller |
| 40a | Auto-steering controller |
| 8 | Prime mover |
| 20 | Operating device |
| 21 | First operation lever |
| 22 | Second operation lever |
| 23 | Steering |
| 41 | Storing unit |
| 50 | Position detector |
| 51 | Receiver |
| 52 | Inertial measurement unit |

First hydraulic device — 31

# Fig.20

Fig.21

| | |
|---|---|
| 55 Display | Controller 40 |
| 56 Display unit | Automatic traveling controller 40b |
| 57 Display controller | Prime mover 8 |
| 57a Position acquirer | Operating device 20 |
| 57b Field register | First operation lever 21 |
| 57c Field acquirer | Second operation lever 22 |
| 57d Route creator | Steering 23 |
| 57d1 First creator | Storing unit 41 |
| 57d2 Second creator | Position detector 50 |
| 157a Line definer | Receiver 51 |
| 157b Setter | Inertial measurement unit 52 |
| 57e First work acquirer | |
| 57e1 Second acquirer | |
| 57f Second work acquirer | |
| 57g Route acquirer | |
| 57h First acquirer | |
| 57i Determiner | |
| 58 Display storing unit | |

Fig.22

EP 4 393 284 A1

Fig.23

## INTERNATIONAL SEARCH REPORT

| International application No. |
|---|
| **PCT/JP2022/031718** |

### A. CLASSIFICATION OF SUBJECT MATTER

*A01B 69/00*(2006.01)i
FI:   A01B69/00 303M

According to International Patent Classification (IPC) or to both national classification and IPC

### B. FIELDS SEARCHED

Minimum documentation searched (classification system followed by classification symbols)

A01B69/00-69/08; G06Q50/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-146061 A (NAT AGRICULTURE & FOOD RES ORGANIZATION) 12 August 2016 (2016-08-12)<br>entire text, all drawings | 1-9 |
| A | JP 2013-201958 A (NATIONAL AGRICULTURE & FOOD RESEARCH ORGANIZATION) 07 October 2013 (2013-10-07)<br>entire text, all drawings | 1-9 |
| A | JP 2021-018542 A (YANMAR POWER TECHNOLOGY CO LTD) 15 February 2021 (2021-02-15)<br>entire text, all drawings | 1-9 |
| A | JP 6-113607 A (SAKURA RUBBER CO., LTD.) 26 April 1994 (1994-04-26)<br>entire text, all drawings | 1-9 |
| A | JP 2009-240181 A (KUBOTA CORP) 22 October 2009 (2009-10-22)<br>entire text, all drawings | 1-9 |
| A | US 2007/0233348 A1 (DIEKHANS, Norbert) 04 October 2007 (2007-10-04)<br>entire text, all drawings | 1-9 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

Information on patent family members

International application No.

**PCT/JP2022/031718**

| Patent document cited in search report | | | Publication date (day/month/year) | Patent family member(s) | | | Publication date (day/month/year) |
|---|---|---|---|---|---|---|---|
| JP | 2016-146061 | A | 12 August 2016 | (Family: none) | | | |
| JP | 2013-201958 | A | 07 October 2013 | (Family: none) | | | |
| JP | 2021-018542 | A | 15 February 2021 | (Family: none) | | | |
| JP | 6-113607 | A | 26 April 1994 | US entire text, all drawings CA | 5438817 2107821 | A A1 | |
| JP | 2009-240181 | A | 22 October 2009 | (Family: none) | | | |
| US | 2007/0233348 | A1 | 04 October 2007 | EP DE AT | 1839479 102006015203 461615 | A1 A1 T | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017055673 A